# EUROPEAN PATENT APPLICATION

(11) **EP 3 182 684 A1**
(43) Date of publication of application: **21.06.2017**
(21) Application number: 15821490.8
(22) Date of filing: 20.07.2015
(51) Int. Cl.: H04M 3/42

(54) **INTELLIGENT SERVICE INTERACTION PLATFORM APPARATUS, SYSTEM AND REALIZING METHOD THEREOF**

(30) Priority: 18.07.2014 CN 201410344894
(71) Applicant: Shanghai Chule (Cootek) Information Technology Co., Ltd., Shanghai 200234 (CN)
(72) Inventor: ZHANG, Kan, Shanghai 200234 (CN); LIU, Hongjun, Shanghai 200234 (CN); LI, Xiaohui, Shanghai 200234 (CN); YUAN, Chao, Shanghai 200234 (CN); WANG, Chong, Shanghai 200234 (CN); ZHENG, Zhiqiang, Shanghai 200234 (CN)
(74) Representative: Guella, Paolo
(86) International application number: PCT/CN2015/084540
(87) International publication number: WO 2016/008453

(57) **Abstract**

The present invention relates to an intelligent service interaction platform apparatus, a system and a realizing method thereof. Combined with user data, intelligent service interaction platform menus which can be provided by a matched merchant object to be talked to are filtered to obtain platform menus which better satisfy user requirements. Furthermore, the present invention combines with user data, and displays the intelligent service interaction platform menus according to a preset display mode. With the intelligent service interaction platform apparatus, the system and the realizing method thereof, user personality characteristics are considered sufficiently, and the intelligent service interaction platform based on the specific user is built between the merchant and the user so that the user can obtain the service information of the matched merchant or receive services provided by the matched merchant through the service interaction platform, accordingly making the interaction between the user and the merchant more convenient and efficient.

## Description

This Patent requires the priority of a Chinese patent application which is submitted on July 18,2014,with an application No. of 201410344894. 6 and the name of invention is *Intelligent Service Interactive Platform Device, System and its Implementation Methods,* all content of which has incorporated in this application by reference.

### Technical Field

This application relates to the application field of electronic products, especially applying to the implementation of intelligent service interactive platform on the terminal of electronic products and the platform device and system.

### Background Technology

In the modern commercial society, voice customer service is a common form. The business objects provide users with various possible services in the form of voice menu. However, there still have many problems in such conventional voice customer service. Firstly, business objects often set up quite a lot voice menus or longer voice description in order to provide users with more comprehensive services. Since users can only receive concerning menu information by voice, and provided that they cannot remember too much, they have to playback current voice menu repeatedly to recall the menus they heard just now, which increases the complexity of operation and causes a lot of bad feeling; Secondly, the arrangement and display order of menus are designed by business objects unilaterally and such arrangement is often fixed and would not change because of different business objects, thus the service option that users require will be arranged in the last among menus provided by business objects. For Users won't know the sequence of menus until having heard all menu, they have to take so long to hear out other menus or voice description which is unnecessary and tediously long. Furthermore, with the fixed design of voice menu, if the menus of service that users require have a deep access, then even users have dialed the same service number many times with the same service required, they have to operate the same steps repeatedly on each dialing, so as to obtain the menus that they require. This is absolutely inefficient.

In consideration of the above factors, it is necessary to introduce a more convenient and effective intelligent service interactive platform, which can facilitate the communication between users and business objects.

### Summary of the Invention

The technical problem this invention aims to address: Providing a more convenient and effective intelligent service interactive platform combining with user data for the targeted business object the user is ready to call.

This invention provides an implementation method of intelligent service interactive platform based on its first aspect, including the following: obtaining user' input sequence, and then matching targeted business objects based on the said input sequence; obtaining the platform menus applicable to the said user data in the matching targeted business objects according to user data; showing users the platform menus applicable to the said user data.

This invention also provides an intelligent service interactive platform device based on its second aspect, including the following: input module, used for receiving users' input information which matches at least one of targeted business objects and the said targeted business objects include the menu of intelligent service interactive platform; preprocessing module, used for obtaining user data; transmission interface module, used for transmitting the user data obtained by the said preprocessing module and the menus which match the input information obtained by the said input module and correspond to the user data obtained by the preprocessing module; output module, used for showing users the platform menus obtained by the transmission interface module 430.

This invention provides an intelligent service interactive platform device based on its third aspect, including the following: receiving module, used for receiving information and user data; storage module, used for storing targeted business objects and the menu of intelligent service interactive platform it contains, in which the said targeted business objects consist of one or more data fields used for looking up targeted business objects according to input information, and the said menu of intelligent service interactive platform consists of one or more data fields which describe the features of menus; query module ,used for looking up in the said menu of intelligent service interactive platform of storage module based on the said input information and user data to obtain the menu of intelligent service interactive platform which matches the said input information and corresponds to the said user data; sending module, used for sending the menu of intelligent service interactive platform obtained by the said query module.

This invention provides an intelligent service interactive platform system based on its fourth aspect, including the following: input device, suitable for detecting user input and obtain input information of users; storage device, suitable for storing targeted business objects and the menu of intelligent service interactive platform they contains; processing device, suitable for receiving input information from the said input device, obtaining input sequence based on the said input information as well as getting user data. It also can look up in the said storage device according to the said input sequence and user data to get the platform menus which match the said input sequence and correspond to the said user data; display device, suitable for showing users the platform menus obtained by the said processing device.

The beneficial effects this invention can yield comparing to the current technologies: Filtering the menu of intelligent service interactive platform provided by the matching targeted business objects who are ready to call, combining with user data, so as to obtain the platform menu which is more in line with user needs. Furthermore, by combining with user data, this invention can display the menu of intelligent service interactive platform in accordance with the set display mode. This invention takes full account of users' personality characteristics and build an intelligent service interactive platform based on the specific user between the business objects and users, which enables the user to get the service information of matching business objects through the service interactive platform or receive services provided by matching business objects, thereby making the interaction more convenient and effective.

### Descriptions of Attached Figure

Figure 1 is the framed diagram of one implementation method of this invention, intelligent service interactive platform system.
Figure 2 is the diagram of dial interface in one implementation method of this invention, intelligent service interactive platform system.
Figure 3-4 is diagram of dial area in one implementation method of this invention, intelligent service interactive platform system.
Figure 5-7 are the diagrams of the platform's start key in one implementation method of this invention, intelligent service interactive platform system.
Figure 8-9 are the data diagrams of filtrating platform menu by processing device based on location data in one implementation method of this invention, intelligent service interactive platform system.
Figure 10a-10b are the data diagrams of corresponding platform menus obtained by processing device based on the user's current location data in one implementation method of this invention, intelligent service interactive platform system.
Figure 11 is the data diagram of corresponding platform menus obtained by processing device based on the targeted business object' location data in one implementation method of this invention, intelligent service interactive platform system.

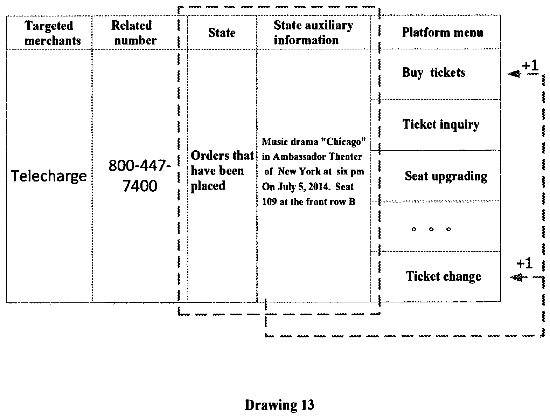

Figure 12-13 are the data diagrams of filtrating the targeted business object' platform menu by processing device based on the interaction history of the user and targeted business object in one implementation method of this invention, intelligent service interactive platform system.
Figure 14 is the data diagram of filtrating the targeted business object' platform menu by processing device based on the input history of user the user and targeted business object in one implementation method of this invention, intelligent service interactive platform system.
Figure 15a-15b are the data structure diagrams of intelligent service interactive platform' menu in one implementation method of this invention, intelligent service interactive platform system.
Figure 15c is the data structure and corresponding operation interface diagram of intelligent service interactive platform' menu in one implementation method of this invention, intelligent service interactive platform system.
Figure 16 is the realization diagram of feedback mechanism in one implementation method of this invention, intelligent service interactive platform system.
Figure 17-18 are the interface diagrams of two implementation methods of displaying menu in terms of information consultation, input query and operator service according to a set mode in this invention, intelligent service interactive platform system.
Figure 19a-19b are the data structure and interface diagrams in which users conduct intelligent service interaction through information consultation menu in one implementation method of this invention, intelligent service interactive platform system.
Figure 20a-20c are the data structure and interface diagrams in which users conduct intelligent service interaction through input query menu in one implementation method of this invention, intelligent service interactive platform system.
Figure 21-22 are the interface diagrams of operator service menu jumping to two implementation methods of this invention, intelligent service interactive platform system.
Figure 23-24 are the interface diagrams of displaying the other two implementation methods of the platform menu in a set display mode of this invention, intelligent service interactive platform system.
Figure 25 is the interface diagram of displaying another implementation method of the platform menu in a set display mode of this invention, intelligent service interactive platform system.
Figure 26 is the interface diagram of displaying another implementation method of the platform menu in a set display mode of this invention, intelligent service interactive platform system.
Figure 27 is the flow diagram of one implementation method of this invention, intelligent service interactive platform implementation method.
Figure 28 is the flow diagram of obtaining location data according to input sequence in one implementation method of this invention, intelligent service interactive platform implementation method.
Figure 29 is the flow diagram of another implementation method of this invention, intelligent service interactive platform implementation method.
Figure 30 is the flow diagram of one specific example of this invention, intelligent service interactive platform implementation method.
Figure 31 is the framed diagram of one implementation method of this invention, intelligent service interactive platform device.
Figure 32 is the framed diagram of another implementation method of this invention, intelligent service interactive platform device.
Figure 33 is the framed diagram of one more implementation method of this invention, intelligent service interactive platform device.

### Concrete Implementation

The following is the more comprehensive description of example implementation methods referring to attached diagrams. The same tags in the diagrams will be used to indicate the same or similar parts. Although the following has described several exemplary implementation and characteristics of this invention, any modifications, adjustments and other alternative implementation of this invention, e.g. making identical substitution, addition or modification, or by substitution, rearrangement or addition steps, shall not incur any restriction of this invention. The appropriate scope of this invention should be determined by the claims of right attached.

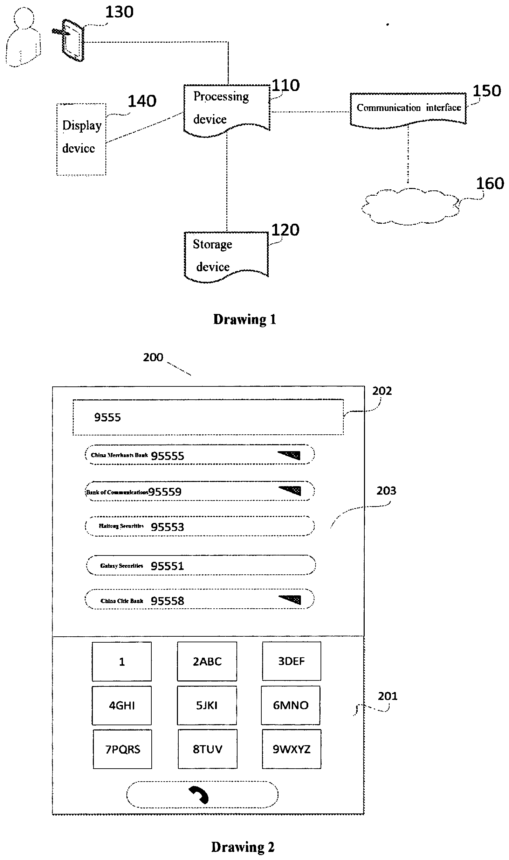

Figure 1 is the framed diagram of the exemplary intelligent service interactive platform system 100 which can be the communication electronic device including display screen according to some examples, such as mobile phone, smart phone, PDA or Tablet and also can be the non-communication electronic device including display screen, such as camera, wearable electronic device, vehicle navigation device and electronic interactive terminal installed in stations or schools and other public places.

The intelligent service interactive platform system 100 can be plugged into the Internet by the broadband means of ADSL, VDSL, Optical Fiber, radio television, cable television, etc. or narrow-band means, such as PSTN, GPRS, 2G, 3G, etc. or connected into Telecom Network by the ways of CDMA, 2G, 3G, 4G and other technologies. According to some implementation examples, the intelligent service interactive platform system 100 can be configured to obtain the matching business object based on users' input data and build the service interactive platform according to the specific user between the matching business object and the user based on the user's data, so that this user can get the service information of the matching business object through the service interactive platform or receive the services provided by the matching business object.

According to the implementation examples of this invention, the term "user data" has been widely used to incorporate at least one of the following: user' personal information, such as age, gender and preference; user' current input, input history, current location, interactive history of connecting the user and the matching business object and its account number, etc. Furthermore, "user data" may also but not limit to include the information of devices related to the intelligent service interactive platform, such as system language and display screen's configuration, etc.

Referring to Figure 1, the intelligent service interactive platform system 100 may consist of processing device 110, storage device 120, input device 130, display device 140 and network interface 150, among which processing device 110 can be CPU or GPU. To be specific, the processing device 110 can include one or more PCB or micro-processing module chips performing various methods which will be fully explained below. In some examples, the processing device 110 can be configured to obtain the business object matching with input data by looking up in the storage device 120 based on input data and user data received by the input device 130.

The storage device 120 may contain one or more kinds of RAM and ROM. The computer programmed instruction can be visited and read from ROM and any other proper memory location and loaded into RAM to be used by the processing device 110. For example, the storage device 120 can store one or more software application. The software application stored in the storage device 120 can contain the operating system 121 applied in the common computer system and device for software control. In addition, storage device 120 can store the whole software application or just a part performed by the processing module 110. For example, storage device 120 can store the intelligent service interactive software performed by processing module 110 and perform intelligent service interactive method.

In some implementation examples, storage device 120 can store one or more types of master data, user data, application data and program code. For instance, storage device 120 can contain local database 122 or cloud database 123. In some implementation examples, storage device 120 can contain one or more targeted business objects, which can contain one or more data fields. The one or more fields are used to store the descriptive information of this targeted business object, such as its name, key words, telephone number, whether it can provide the service of intelligent service interactive platform, its menus and interactive records, user accounts of corresponding intelligent service interactive platform, etc.

In some implementation examples, input device 130 and display device 140 can be coupled into processing module 110 with proper interface circuit. In some implementation examples, input device 130 can contain multiple physical and virtual keys and each key corresponds to one number and/or one or more letters; Users can press or touch the keys of input device 130 to input information into intelligent service interactive platform system 100. In some implementation examples, input device 130 can include induction input device. For example, input device 130 can also be voice input and recognition device and the user conduct voice inputting by voice input recognition device which will recognize the voice contents that the user has inputted after having detected the existed user's voice input. The recognition results can be the text information and standard voice corresponding to this inputted voice; Or the input device 130 can be graph recognition device detecting the graph the user has inputted, such as barcode scanned, paint or graph the user has drawn and recognizing them so as to obtain input result; Or input device 130 can detect user's body movement in specific area or movements with defined meaning to obtain detection result. In some implementation examples, input device 130 can contain some function keys through the user can initiate some processes performed by the intelligent service interactive platform system 100 or interact with the intelligent service interactive platform system 100 in other ways.

Display device 140 can include one or more display screen showing the user text or graph. For example, display device 140 can show GUI.

Network interface 150 provides communication connection, which enables the intelligent service interactive platform system 100 to exchange information with certain external device. According to one embodiment, the network interface 150 may include network interfaces (not shown), which is configured to receive and transmit the information sent from the online service 160. While according to some other embodiments, the online service 160 can be used to provide web services on the Internet, cloud storage services etc.

Figure 2 illustrates the dial interface 200 of the sample intelligent service interactive platform system 100. As shown in Figure 2, the dial interface 200 may include the dialer 201, the input box 202, the matching business objects display area 203 etc.

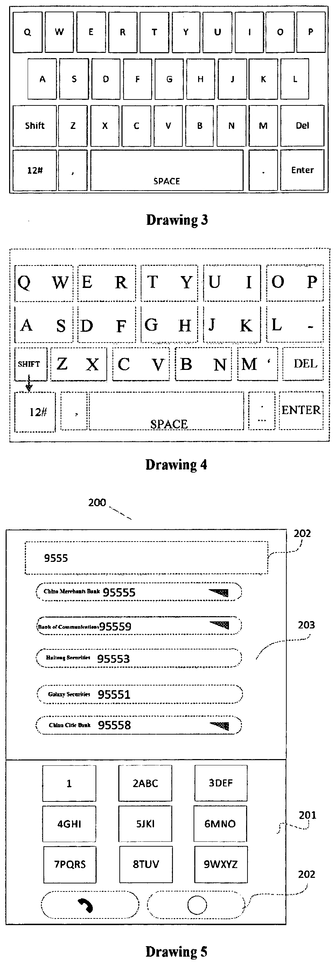

Whereas, users will be able to input in the dialer 201, and the data input will be display in the input box 202. When the dialer is triggered, for instance, the hidden status of the dialer 201 turns to "pop-up", the system 100 will obtain the input data through the taps and touches detected on the keys of the dialer 201, in which the dialer 201 may include multiple physical or virtual keys, as shown in Figure 2, each key corresponds to a specific number, symbol and/or letter. In other implementation methods, the dialer 201 may also be presented as a QWERTY keyboard or as what is shown in Figure 4, a compact keyboard.

When inputting, users will press the keys in a proper order, and numbers or letters on the pressed keys will generate the input content, e.g. When a user needs to input Red Top Cab for taxi service, he or she could dial its reservation hotline (703) 333-3333 in the Dialer 201 in a proper order "PQRS(7)", "DEF(3)", "DEF(3)", "DEF(3)", "DEF(3)", "DEF(3)", "DEF(3)", "DEF(3)", "DEF(3)"; or he or she may tap the keys "PQRS(7)", "DEF(3)", "DEF(3)", "TUV(8)", "MNO(6)", "PQRS(7)" in order.

Based on certain implementation methods, the processing device 110 obtains what the user put in and matches it up with the data field of various business objects saved in the storage device 120 to get hold of assortative business objects.
For example, the device 110 captures the keystrokes made by the user in the dialer 201, then analyzes and acquires the input sequence that corresponds to the keystrokes on the basis of the number and letter indicated on each key, whereas the input sequence may be either texts or numerical strings. For instance, by pressing "PQRS(7)", "0", "DEF(3)", "DEF(3)", "DEF(3)", "DEF(3)", "DEF(3)", "DEF(3)", "DEF(3)", "DEF(3)", the numerical string 7033333333 can be analyzed and obtained, or by pressing "PQRS(7)", "DEF(3)", "DEF(3)", "TUV(8)", "MNO(6)", "PQRS(7)", the text "redtop" will be analyzed and obtained instead. Next, the processing device 110 continues the matching and pairing processes in the storage device 120 using the acquired input sequence, e.g. The acquired sequence may be paired with the phone numbers, names and short names of the business objects, so as to obtain the assortative targeted business objects.

In one of the modes of execution, one or more matching targeted business objects will be displayed on the matching business objects display area 203 after the processing device 110 obtains the targeted business objects, and the device 110 will check if the said matching targeted business objects are able to render the services of the intelligent service interactive platform. If relevant menus of the intelligent service interactive platform are available for the targeted business objects, the processing device 110 will employ the marking method already set, for example, display these targeted business objects in different colors (not shown in the Figure), or refer to Figure 2, inform the user to render service of the intelligent service interactive platform to the targeted business objects by marking in the set position of those targeted business objects, where in another mode of execution, the matching results are not revealed to the user.

Next, the input module 130 will further check the selection of targeted business objects and whether the service of intelligent service interactive platform should be launched for the matching targeted business objects.

In a certain mode of execution, users may set the control, e.g. users may tap or hold the targeted business objects to be chosen for a pre-defined amount of time or use a pre-defined voice control or gesture command to select the matching targeted business objects. In another mode of execution, the system 100 will select those business objects who are matched with part of the data input by the user or the entire input sequence as its targeted business objects, whether these targeted business objects are displayed or not.

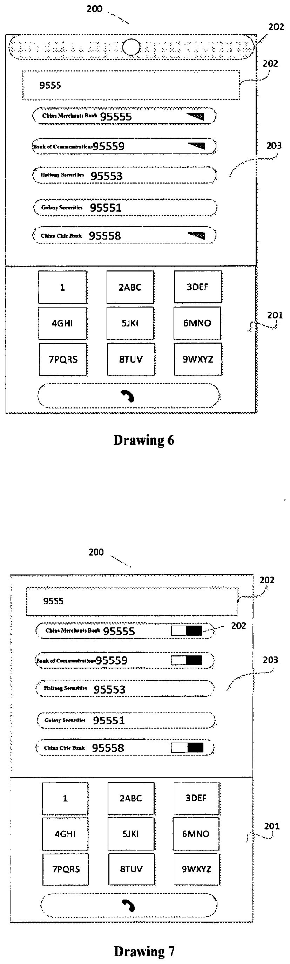

In a certain mode of execution, the interface 200 further covers the pre-set platform's start key 202 as shown in Figure 5. The intelligent service interactive platform of the matching targeted business objects selected may be launched by tapping, pressing or other operation that launches the platform, in which the start key 202 may be either physical or virtual and positioned on the screen. In certain modes of execution, the start key of this platform may be in designated position of the dialer 201, e.g. the the bottom of the keyboard (see Figure 5); or in designated position outside the dialer 201 (see Figure 6), e.g. the top of the keyboard. When the Platform's start key 202 is activated by means of pressing or other, the Intelligent Service Interactive Platform of the matching targeted business objects selected will be launched. When the platform's start key 202 of the settings 10 is configured separately from the dialing keys, the start key 202 will only be configured as launching the platform service, while the dialing keys will call the corresponding input sequence. In certain modes of execution, the platform's start key is also the dialing key, when this is the case, the processing device 110 may configure the keys, for instance, the processing device 110 will check if the service of the intelligent service interactive platform is available for the currently selected targeted business objects when the input device 130 detects the key being tapped or pressed. If it is available, the processing device 110 will prioritize the execution of launching the platform service, and if not, the processing device 110 will prioritize that of dialing; or, the operation of its corresponding key may also be configured as per its actual usage, for instance, pressing of the key may be configured as the execution of dialing, but when the processing device 110 detect that the service of intelligent service interactive platform is available for this matching targeted business objects, the processing device 110 will detect the existence of the platform service; or, the key can be configured as follows: when the the first pre-set operation or the duration of which exceeds the first threshold value, the key will function as dialing key when pressed, while if the second operation or the duration of which exceeds the second threshold value, the key will serve as a start key for launching the platform service. As shown in Figure 7, in certain modes of execution, at least one business is display on the matching business objects display area 203, in which every business that is able to render service of the intelligent service interactive platform has a corresponding start key of the platform. In other modes of execution, the Platform's start key 202 is not limited to a key form, the system 100 can determine whether or not to initiate the service of intelligent service interactive platform of the corresponding targeted business objects by detecting the existence of any pre-set voice control or gesture command. In other modes of execution, when the input device 130 detects more targeted business objects that are selected, the Intelligent Service Interactive Platform will be directly launched. For example, if the selection of matching targeted business objects is detected, the user may perform no further operation for a certain amount of waiting time and the amount of waiting time exceeds the pre-set time threshold, the intelligent service interactive platform of the corresponding matching targeted business objects will be launched by this time threshold.

When the service of the intelligent service interactive platform of the matching targeted business objects is activated, the processing device 100 obtains user data, and captures the menu of the intelligent service interactive platform of this business which corresponds with the said user data from the storage device 120, in which the storage device either 120 may be on the same end with the processing device 110, or transmit data to the processing device 110 by means of wifi/GPRS or other network connection modes. When using network to transmit data, the processing device 110 may also transmit the user data and the query to the storage device 120 through the network interface 150 and receive the menu of the intelligent service interactive platform of business objects obtained by the storage device 120.

In a certain mode of execution, user data may also include the location data which can reflect the current geographic location of the user or the targeted business that he or she is trying to call. The processing device 110 will obtain the current geographic location of the user or the targeted business that he or she is trying to reach, and filter the menu based thereon, so as to obtain the menu items applicable to these location data.

Among which, the formats of the said location data may varies with the specific device and the development of application techniques. In a certain mode of execution, the described location data can be GPS data. Or in some certain mode of execution, it can be the mac address of wife. Or it can be base station data or the code with station location markers, such as MCC, MNC, LAC, CID. In other mode of execution, the described location data can also be corresponding dialing codes. While in some mode of execution, the described area data can also be names of administrative divisions which are corresponding with current longitude and latitude, such as a city name, a province/state name, a country name and so on.

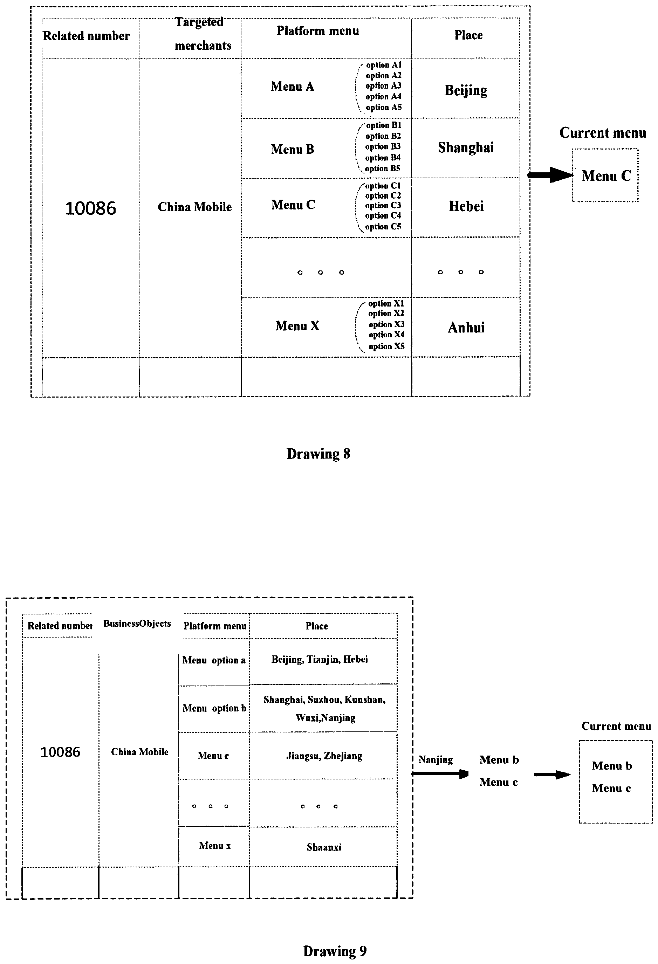

After obtaining the above location data, the processing device 110 can further filter the menu in platform of business objects. For example, retrieve this location data in the corresponding data field "location" of menu in platform, then you can get all data field "location" data which include this location after filtering, so that you can obtain the platform menu which suitable for this location data. See Figure 8, in one implementation method, each business object at least includes one set of platform menu. Different sets of platform menu don't have exactly the same menus. And every set of platform menu includes the suitable data field "location". According to the obtained data base, the processing device 110 can obtain the platform menu groups which suitable for the location data by searching; see Figure 9, in another implementation, each business object include many single menus. Every single menu includes the suitable data field "location". After obtaining the location data of users, the processing device 110 can select every single menu which suitable for this location data. And, the processing device 110 can report them to users according to the set display module.

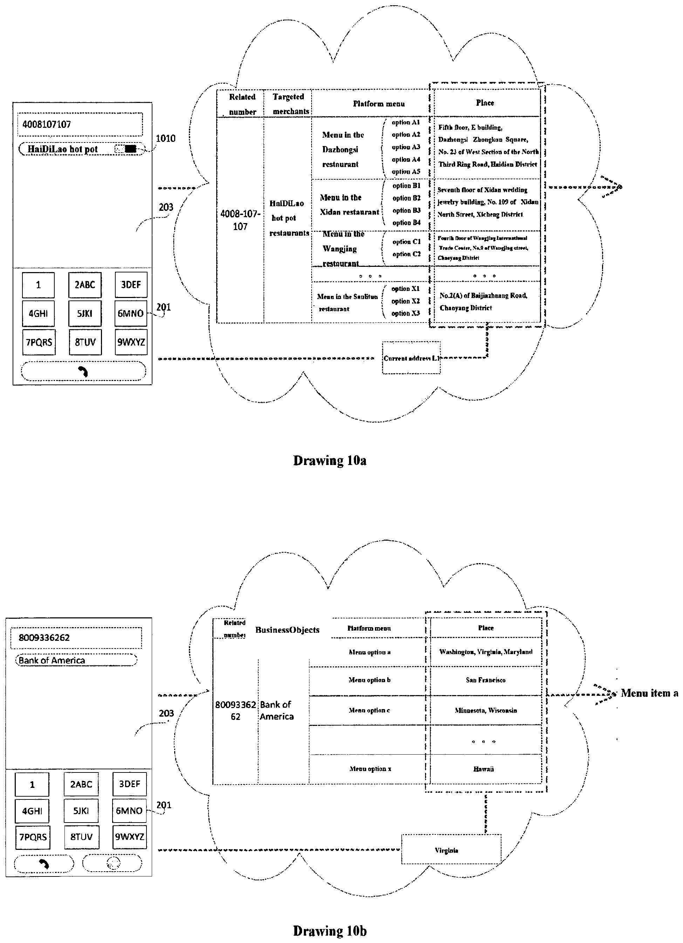

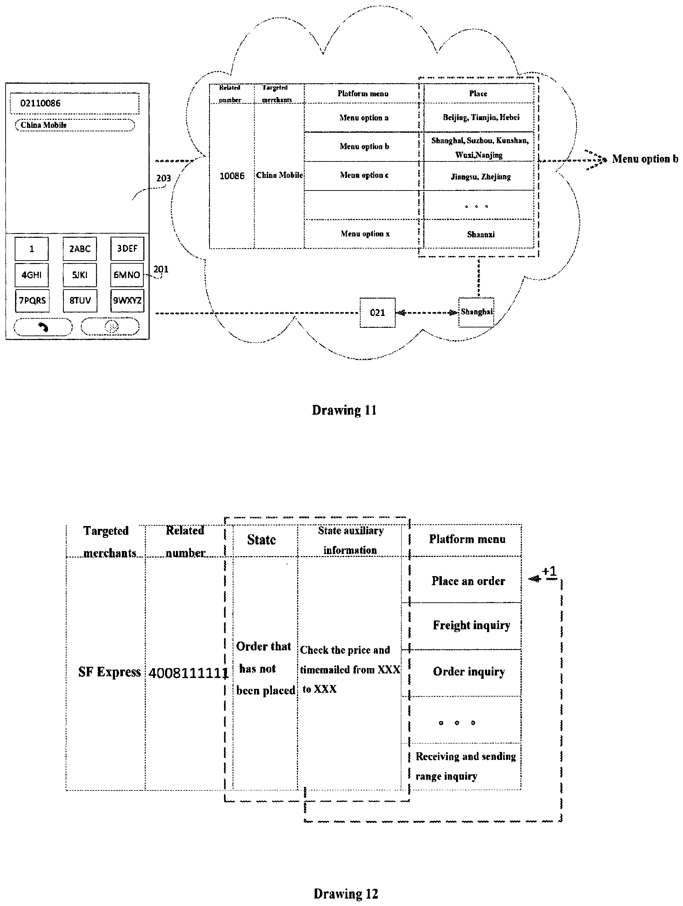

To be specific, for business objects with multi working locations, the processing device 110 can filter the platform menu based on the current location data, and selection the platform menu (group) with the closest location. For example, for business objects in catering industry, see Figure 10a, users dial phone number of "Haidilao Hotpot" in the dial area 201, the matching business object display area 203 can display all items with "Haidilao Hotpot". When users click the "platform initiate button"1010 next to this item, the processing device 110 can obtain the current location data as location L1. Then the processing device 110 can calculate the distance between the corresponding location and the current location and order them according to the distance. Once acquiring the order results, the processing device 110 can report the set of service menu with the closest location to users. The service menu can include cookbook, business information, traffic, reservations of the corresponding business objects. For example, see Figure 10b, when users call the customer service number of Bank of America in San Francisco, the processing device 110 can detect the current location as San Francisco. And the processing device 110 can obtain all platform menus which include "San Francisco" in Bank of America. Also, see Figure 11, for all business objects of telecommunications companies, the processing device 110 can select the local platform menu (group) based on the designated location. When users dial the service number 02110086 in Shanghai China Mobile, the processing device 110 can detect the location of the targeted business (China Mobile) is in Shanghai. When the processing device 110 further detects the launch of the intelligent service interactive platform for China Mobile, it can select the platform menu of "Shanghai" from all platform menus in "China Mobile".

In the other mode of execution, users' data can include the interaction history between users and the match business objects. Among which, every business include data field which used for recording interaction history. Every time users finish interaction with business, the processing device 110 can save this record into the data field. When launching the current intelligent service interactive platform, the processing device 110 can read the interaction history of this data field, and filter the platform menu of this business according to this users' data. The interaction history can be the latest history and several previous histories.

For example, see Drawing 12, for business objects of express delivery, the processing device 110 can read the interaction histories with the "No Order" and "query on prices and time from XXX to XXX" in supplementary information between users and this business. Then the processing device 110 can filter the platform menu based on the acquired user data and display "Ordered" before "query on order".

For example, see Drawing 13, for business objects of tickets, the processing device 110 can read interaction histories between users and this business, getting the information of "Booked" and "tickets of 'Chicago' in Row B5 Number 109 on Ambassador Theater in New York on 8 p.m. July 5th, 2014". Then the processing device 110 can filter the acquired users' data, and display "ticket change" and "seat update" before "ticket query" and "ticket buying", and/or prioritize activities on "activity recomendation" in "New York". Activities between 20:00-22:45 on July 5th, 2014 will not be displayed or delayed.

Besides the above trading records, the interaction histories also include the account information of this business, such as user name, password, and bank account. The processing device 110 can further acquire the interaction history in this account based on the account information, and filter on the platform menu based on the interaction history.

For example, for business objects of bank, the processing device 110 will acquire users' current account status according to users' account information. If acquiring foreign exchange financing methods of current account, then the processing device 110 can filter the platform menu based on the users' data, displaying "foreign exchange rate" before "fund query" and "individual share recommendation".

For business objects in catering industry, the processing device 110 can acquire the status of this account based on the users' account information. For example, when acquiring the booking of dinner, the processing device can filter in the platform menu based on the user' data, displaying "cookbook query" and "recommended dished" before "reservation" and "appraise".

In other implementation method, user data also include users' input histories. The processing device 110 can record the times of input histories or make statistics on users' input histories in the setting time, and save the input histories which rank the first N times.Based on the recorded input histories, the processing device 110 can filter on the platform menus.

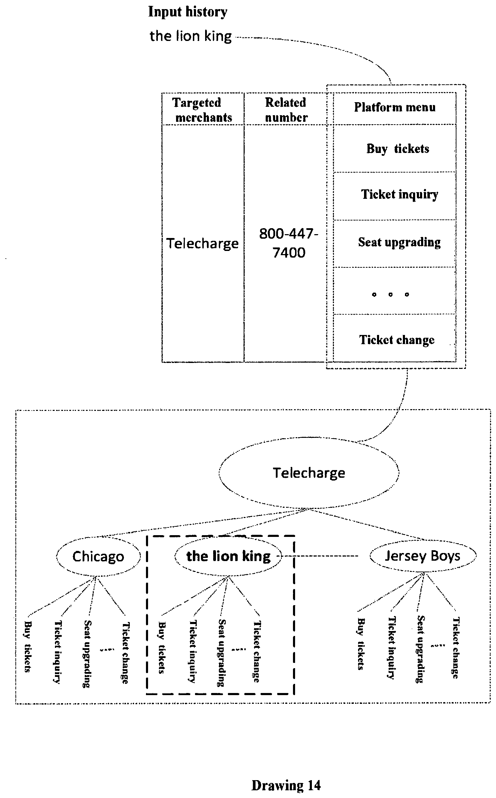

For example, see Figure 14, for ticket business objects, the processing device 110 can filter on the platform menus of this business based on the input history. If user inputs "the lion king", then the processing device 110 can filter on the platform menus, trying to prioritize platform menus which match with "the lion king" other than other platform menus.

In another implementation method, user data also include users' personal information, which can be ages, genders, preference and so on. The processing device 110 can further analyze based on users' personnal informaion, acquiring users' ages, genders and preference. Or the processing device 110 can furthe be interactive with users, acquiring users' personnal information and save all information users report back to. Then the processing device 110 save all these personnal information and filter on the platform menus based on users' personnal information.

In another implementation method, user data can also include the current input of users. During the interlligent service interaction between users and business objects, users can further supply information. Throught input device 130, the processing device can acquire users' current input and filter on the platform menus based on the current information.

In another implementation method, user data can further be combined with system parameter in system 100. For example, user data can further include the current system language. The processing device 110 can obtain the current system language and transform the language into voice display in the platform menus.

User data can furthe include the current system time. The processing device 110 can acquire the current time, and filter them based on the time field on the platform menu provided by matching business objects. For example, the processing device 110 can filter on the platform menu based on the current time, shielding those platform menus which have already expired or have not begin yet. Also, the processing device 110 can provide hint to users based on the working time provided by matching business objects and current system time. The processing device 110 can remind users that the manual telephone services are not provided at present.

For the above-mentioned "display priority" or "display lag", the processing device 110 can either change the display level of the corresponding platform's menus or make marks on the corresponding platform's menus. In some implementation methods, the processing device 110 can improve the display level of menus that need display priority to that of at least one level of the parent menu, or reduce the display level of menus that need display lag to that of at least one level of the sub menu. In some other implementation methods, the processing device 110 may, in accordance with the need for "display priority", re-order the platform menu so as to meet the requirements. For example, the processing device 110 can it possible for the first level to only show the platform menu that needs" display priority" through setting up the display level of the menus. Also, in some implementation methods, the processing device 110 can filter the platform menu in accordance with the need for "display lag" to screen the menus that need to be "delayed in display".

For each business object object stored by the storage device 120, the corresponding intelligent service interactive platform menu can either use the form data format or the tree data format. For example, it can be the XML data format, or the Json data format, or the link object data format.

According to some implementation methods, the processing device 110 can form the platform menu of business object object in advance according to the service menu the business objects can provide, for example, the visualization technology can be adopted to make visualization treatment on the existing voice menu of the business object object and obtain the corresponding visual voice menu results, thereby forming the menu data of the intelligent service platform.

In a certain implementation method, specifically, according to the visualization results of each option in the voice menu, regard each menu as a link object, and each link object contains one or more different data fields, such as "display text", "menu content", "parent node" , "link node" , "menu type" and "priority correction parameters", etc.. Link objects formed by one or more menus constitute the menu.

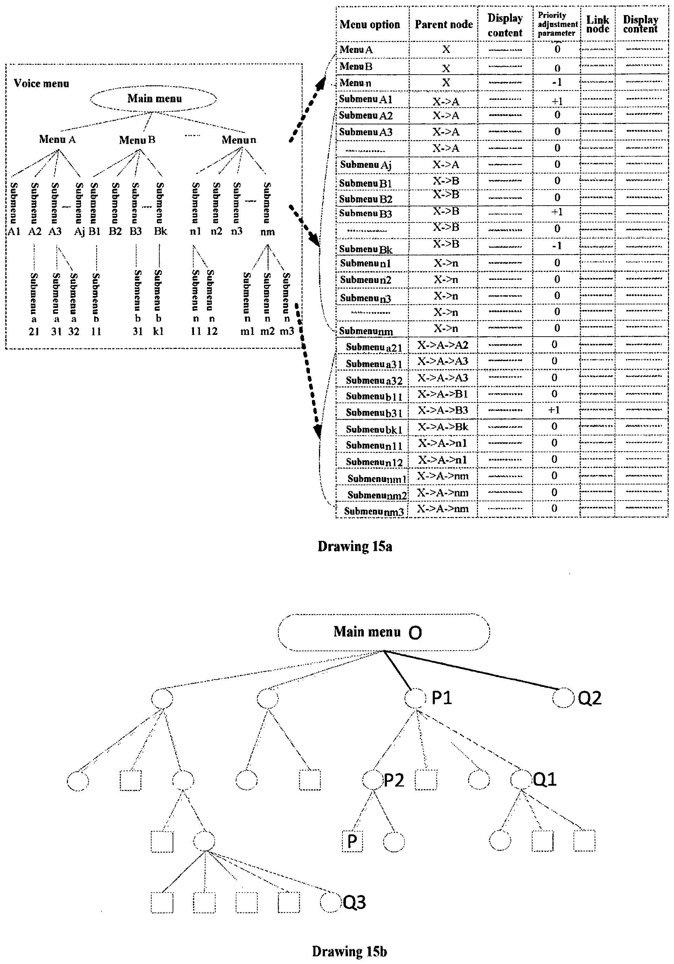

For example, as shown in figure 15a, for a business object object, the corresponding voice menu includes three levels, namely, the menus A, B... N, the menus on the interface of first-level sub menu Al-Aj, Bl-Bk.... nl-nm, and the menus on the interface of first-level sub menu a21, a31, a32, bll, b31, bkl, nil, nl2, nml, nm2 and nm3. Through the voice recognition technology, extract the content contained in each menu of the voice menu, which will be transformed into the form of text and stored in the corresponding data field of "display text" of the menus. Record the corresponding parent menu nodes of each menu and store them into the corresponding data field of the parent node of the menus. Among them, each menu can also include the "menu content" of data field, recording the actions, links, data, text, pictures, pointer and formula related to this menu. Each menu can also further include the data fields of "link nodes" , recording the menus of the parent node of this menu, the next level menus of this menu, or other menus that do not belong to the same parent node. Each menu can also include the data fields of "priority correction parameters", recording the effect of user data or business object operation on the display level of this menu. Then, the corresponding platform menu is formed according to the data fields of each menu. For example, determine the final display level of this menu according to the data field of "parent node" and the content of "priority correction parameters"; determine the corresponding icon on the screen according to the "display content" of data field; determine the relationship between this menu and other menus according to the content of "related nodes" of data field. In other implementation methods, the data field of "link nodes" and "menu content" can also be merged together for processing.

In another implementation method, the tree data structure can also be used to store the text recognition results of voice menu of the business object object. Specifically, as shown in figure 15b, each menu node in the tree data structure includes at least the data field of "display content" and "menu content", in which the "display content" stores the icon and other data used to display this menu, and the "menu content" stores the content description of this menu, such as link, text, pictures, data, pointer, formula, or instruction.

According to the types of the "menu content" of data field, the menu nodes of tree data structure can include the following two types. One kind of menu node is an indication node, such as node Q1, node Q2 and node Q3, and the data field of "menu content" may contain one or more pointers set up with nodes. When the processing device 110 detects that the user has selected the menu of indication node, then it proceeds the operation of jumping to the corresponding set node according to the pointer of the data field for the "menu content" of the menu. For example, for node Q1, its content of menus is the pointer pointing to the node of the lower level, and the processing device 110 reads the contents of the data field of the "display content" of the lower node, displaying the lower menu of node Q1; for node Q2, its content of menus is the pointer pointing to the node of the upper level, and the processing device 110 reads the contents of the data field of the "display content" of the upper node, displaying the menu of the upper node and performing the operation of returning to the previous menu; for node Q3, its content of menus is the pointer pointing to the root node, and the processing device 110 reads the contents of the data field of the "display content" of the root node, displaying the menu of the root node and performing the operation of returning to the main menu.

There is also a type of menu node called the content node, such as node P, which contains data files or operating instructions in the data field of "menu content". In some implementation methods, when the processing device 110 detects that the user has selected the menu of content node, it reads the contents of the data field for the "menu content" of this menu and display the corresponding web pages, text and image of data file to the user. In some implementation cases, the processing device 110 may also read the contents of the data field for the "menu content" of this menu and perform specific instructions, such as performing the dialing instruction or input instructions. Furthermore, the content node menus can also include the data field of "node path", recording the corresponding key sequence of all nodes in the access path from the root node to the content node of menus. For example, for the P menu, its data field "node path" records the key sequence corresponding to all the nodes in the access path from root node to node P, namely, "0-P1-P2-P". When the processing device 110 executes the dialing instruction, it can dial the the given number in the instruction, or obtain the corresponding dialing sequence according to the data field "node path". When the processing device 110 executes the input instruction, it reminds the user to input, for example, it can display the input box to remind the user to input in the input box, or further input the user's input signal detected by the input device 130, and obtain the user's input information according to the input signal.
When the processing device 110 executes the input instructions, it makes operation on the obtained input information. For example, it stores the interactive history, user account and input history, etc. into the corresponding data field of the user and the business object object; furthermore, the processing device 110 can also make queries according to the input information, and return the query result which will be displayed to the user.

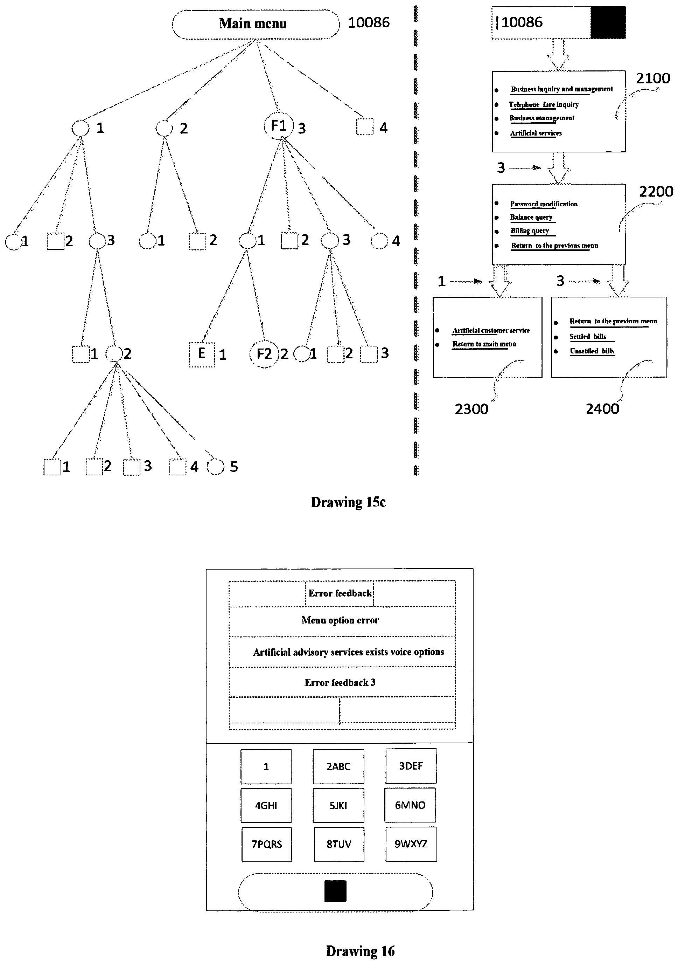

Specifically, refer to the figure 15C, when the user inputs 10086 and starts the intelligent service interactive platform, he obtains the matching platform menus, and the first level menus are arranged in the corresponding main interface 2100 one by one. The corresponding platform menus are stored in the storage device 120 via the Json tree data structure, wherein, each node represents a menu, and there are specific corresponding values, and the value of each node can correspond with the option key of the node. For example, as shown in the figure, when the user clicks the numeric key 3 or input the number 3 in the first level menu, the processing device 110 receives an input signal transmitted by the input device 130, and obtains the menu node F1 corresponding to the number 3. The processing device 110 detects that the menu node F1 is the indication node which points to its next level menu, and then the processing device 110 obtains the data field of the " display content" of the next level node, which will be displayed in the interface 2200 of the next level. Next, continue to test the user's input. When the user inputs 1, the processing device 110 obtains the next menu corresponding to the number 1, which will be displayed by the interface 2300, and when the user inputs the number 3, the processing device 110 obtains the next menu corresponding to the number 3, which will be displayed by the interface 2400. Among them, in the interface 2300, when the user selects the operator service, that is, the menu corresponding to the node E, the processing device 110 can further include the dial sequence corresponding to the node E. In one implementation method, the processing device 110 can read the data field content of the "node path" of the node E, that is, the value of all nodes in the access path from the root node to the node E. As shown in the figure, in the access path from the root node to the node E, the key values that pass the node are respectively corresponding to 3, 1 and 1, then the processing device 110 obtains the node path "3-1-1". Combine it with the input sequence, then obtain the dial sequence "10086-3-1-1", and then dial in accordance with the sequence. In specific implementation method, the preset delay time can be added between the corresponding number of each level obtained according to the actual operation line. For example, set x seconds between 10086 and 3, xl seconds between 3 and 1, and x2 seconds between 101 and 1, wherein X, X1 and X2 may be the same, and different values can also be set. In another implementation method, the processing device 110 can also read the data field content of the "menu content" of node E. For example, it can be the "dial 13800000000", then the processing device 110 obtains the instructions of "dial the number" and the corresponding number sequence, namely, set the number "13800000000", and then execute the dial instruction. In another implementation method, the processing device 110 can also send the query information through the network port 150 and receive the feedback from the online services 160 according to matched business object objects. The feedback results contain the platform menu of the business object object. For example, the online service 160 may generate the corresponding platform menu in the form of a state machine, etc. based on the service option data and menu level from the business objects. In another implementation method, the processing device 110 can also select the menu data submitted by business objects and build the intelligent service interactive platform for business object objects by virtue of the HTML5 technology.

Among them, the menu data of intelligent service interactive platform corresponding to business object objects can also be dynamic.

In some implementation methods, the system 100 can further include the feedback mechanism. The processing device 110, through inputting the results collected by the device 130, obtains the user's feedback results of the intelligent service interactive platform menu of the user's input device for the business object objects that are currently in the interactive state or have completed the interaction. For example, refer to the figure 16, when the input device 130 detects that the user clicks and operates on the second option in the feedback menu, the processing device 110 obtains the contents of the second option according to the feedback menu, that is "existence of voice options for artificial consulting services "and then obtains the feedback menus, namely, the "artificial consulting services", as well as the existing problems, namely, the "existence of voice options". In one implementation method, the processing device 110 will further return the user's feedback result, namely, the feedback menus and the existing questions, to the storage device 120 whose menus will be marked or modified. In another implementation method, the processing device 110 150 can also transmit the user's feedback results to the online service 160 through the network port 150, and update the feedback menus through the online service 160.

In some implementation methods, the business object objects stored in the storage device 110 can be open to the associated business objects who can make modification, addition, deletion and other editing operations through the network port 150 on the corresponding intelligent service interactive platform menu in a timely manner. For example, business objects can be accessible to the corresponding platform menu through the network port 150 and make error correction on the content that exist in the corresponding platform menu, or delete the expired data in the corresponding platform menu, or add new menus to the corresponding platform menu, or adjust the display level of a certain platform menu. Also, the processing device 110 can send the user's feedback result to the corresponding business object through the network port 150, facilitating the business objects to make modification in time.

In some implementation methods, the system 100 may further include updating mechanism. The processing device 110 updates the corresponding platform menus of the business object objects stored in the storage device 120 according to the preset updating mode. For example, the immediate updating mode can be adopted. When the business objects execute the editing on the corresponding platform menus, the processing device 110 records the edited content executed by the business objects, and replaces the original contents in the storage device 120 with the edited content. Besides, the timing updating mode can also be adopted. When the interval time reaches the pre-set time, such as one day or one week, the processing device 110 alters the corresponding menus in the storage device 120 according to the edited content of the corresponding platform menus to the business objects. The trigger updating mode is also a choice. Whenever the user starts the intelligent service interactive platform of the business object object, the processing device 110 detects whether there are updated content by the business objects. If there are, then the platform menu stored in the storage device 120 will be updated according to the updated content.

When the processing device 110 obtains the corresponding platform menu, the processing device 110 displays the platform menu on the interface of intelligent service interactive platform to the user through the preset display mode of the display device 140.

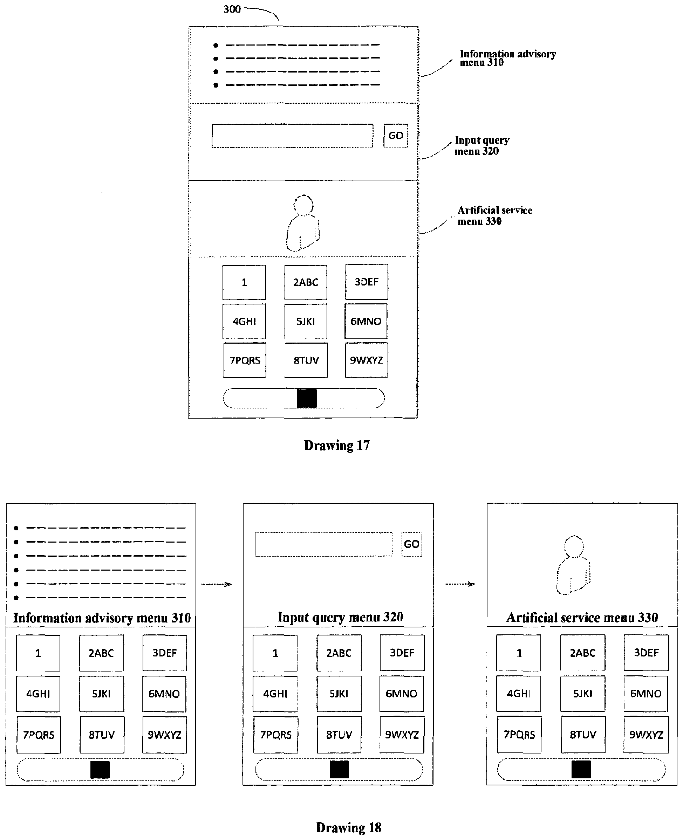

In one implementation method, the processing device 110 divides the corresponding platform menu into the corresponding menu types in the display mode according to the types and interactive forms of users' data. For example, as shown in the figure 17, the intelligent service interactive platform interface 300 includes the information consulting menu 310, input query menu 320 and operator service menu 330, wherein each type of menu can further comprise one or more sub menus of at least one level. The processing equipment 110 respectively display the corresponding platform menu according to the above-mentioned three display types based on the required user data type and the interactive form.

The main interface 300 of intelligent service interactive platform can display one or more types of menu in the display mode. In one implementation method, as shown in Figure 17, the above-mentioned three types of menu are displayed on the main interface 300 of the intelligent service interactive platform by means of the preset arrangement mode. In another implementation method, as shown in Figure 18, the above-mentioned three types of menu are displayed on the main interface 300 of the intelligent service interactive platform one by one according to the user's gestures or other instructions.

When the processing device 110 receives the user's input in the input device 130, it obtains the menu type selected by the user, based on which it searches for the suitable menus in the data field of "menu type" among the menus stored in the storage device 120 and selects one or more menus matching this type of menu, which will be displayed to the user through the display device 140.

According to some implementation methods, the processing device 110 detects whether the platform menu requires the users to further input and classifies those that do not require the users to further input into the information consulting menu 310. For example, for the type of bank business object objects, the information consulting menu 310 can include financial products recommendation, credit card recommendation, storage plan recommendations and the latest interest rate / exchange rate inquiries, etc.. And for the business object objects of ticket business, the information consulting menu 310 can include the latest advance notice of all kinds of activities, the announcement of the result of recent sports events, the latest promotion activities, the ticket price and the issuance conditions of tickets, etc..
For the business object objects of the real estate, the information consulting menu 310 can include housing resource information recommendation, the introduction of specific housing information and the recent promotional information of housing price, etc.. For the business object objects of traffic industry, the consulting menu 320 can include public transport shifts, operation time, price, map / line diagram and information of ticket stations, etc.. For the business object objects of catering business, the consulting menu 320 can include the menu, the introduction of new dishes or recommended dishes, the user evaluation, promotion activities and the telephone / address of business objects. For business object objects of express delivery, the information consulting menu 310 can include the information of network station, service options and price list, etc. of express delivery.

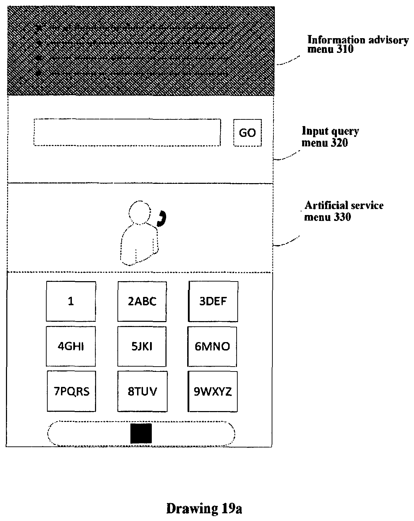

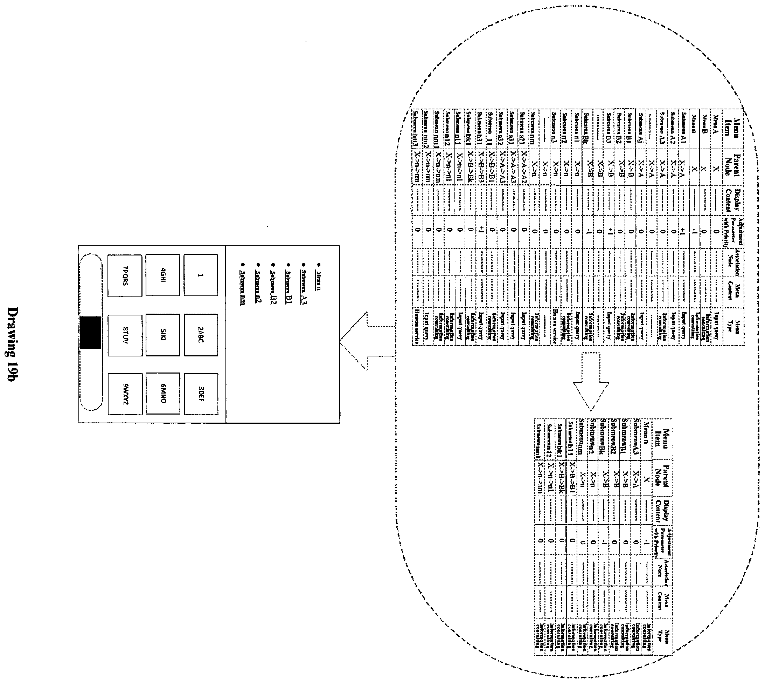

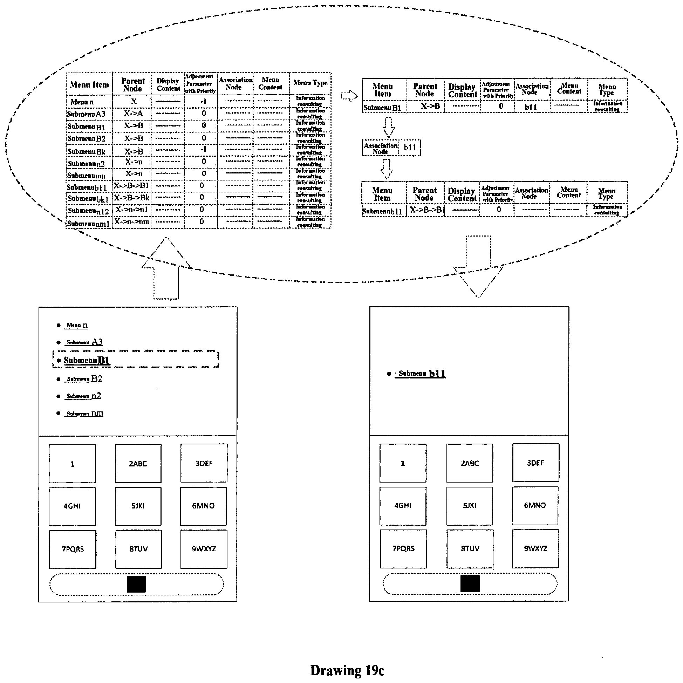

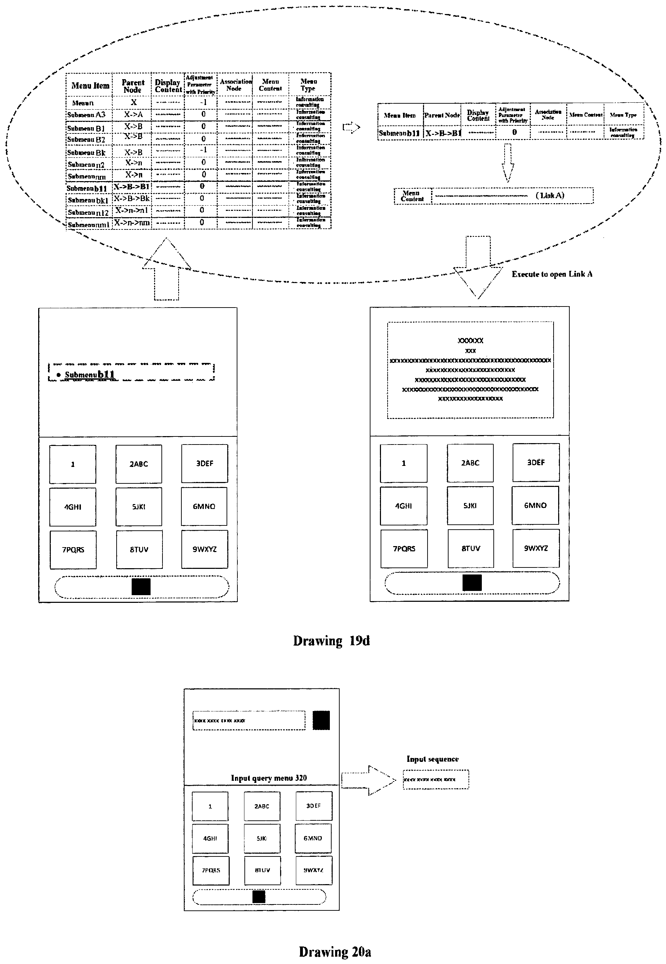

As shown in the figure 19a-19d, in one implementation method, when the user chooses the information consulting menu 310 and then enter the sub menu of information consulting, the processing device 110 searches for the menu of "information consulting" for the data field "menu type" and displays according to the display level. Then, the input device 130 detects the input signal by the user, and transmits it to the processing device 110 which obtains the menu selected by the user according to the input signal and detects whether there are link nodes and display level of the link nodes. When there are link nodes and the display level of the link nodes is lower than that of the menu, this signifies the presence of a sub menu in this menu, and the processing device 110 traverses the next sub menu and forms the next sub menu. When there are link nodes and the display level of the link nodes is higher than that of the menu, this means that the menu is the return to the previous menu or return to the main menu, and the processing device 110 will jump to its link nodes and displays the corresponding menu. When there are no link nodes, the processing device 110 will extract the "menu content" of the data field of this menu. For example, when the "menu content" of the data field of this menu is the link, then the link content will be displayed to the user, such as the web link, image or text message.

When the processing device 110 displays the platform menu of the information further provided by the user as the input query menu 320, wherein, the input query menu 320 may further include the input box, and the processing device 110 filters the platform menu according to the further input information. For example, search in the data field of "menu content" in the menu according to the input information and obtains the input query menu 320 of the data field of "menu content" matching the input information. Therefore, the query menu 320 is associated with the further input of the user.

For example, for the business object objects of the bank industry, the input query menu 320 can include the user's current account information, billing inquiries for the user's current account, balance inquiries, the business once handled of the user's current account and other online operation etc..For the business object objects of the ticket business, the input query menu 320 can be activities introduction and preference recommended associated with the input history by the user, or the ticket information, ticketing states, balance and the corresponding activities of the ticketing under the user's account. For the business object objects of the real estate, the input query menu 320 can include the introduction of real estate information based on the user's input or the real estate information under the account of telephone users. For the business object objects of the traffic industry, the input query menu 320 can include the ticket query and operation under the account of telephone users and the query and payment for the parking fee / refueling fee under the user's account, etc.. For the business object objects of catering businesses, the input query menu 320 can include the coupons and booking information, etc. Under the user's account. For the business object objects of expressage/ takeaway businesses, enter the input query menu 320 can include the location query, the contact way for the specific operator and the expected arrival time, etc. under the user's account.

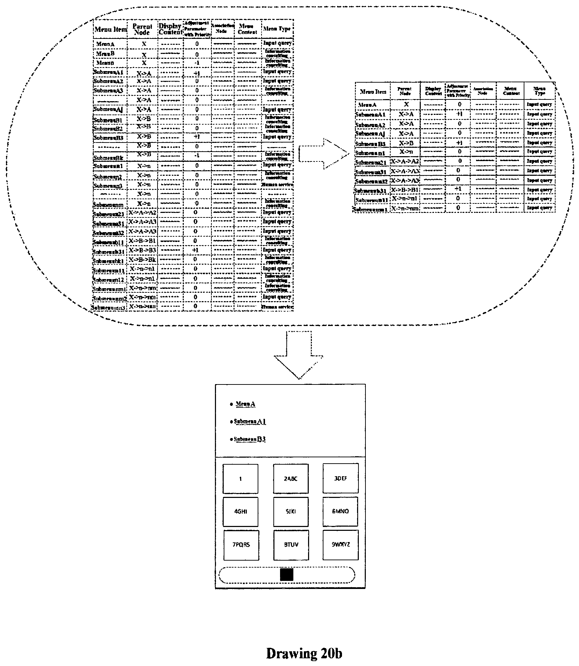

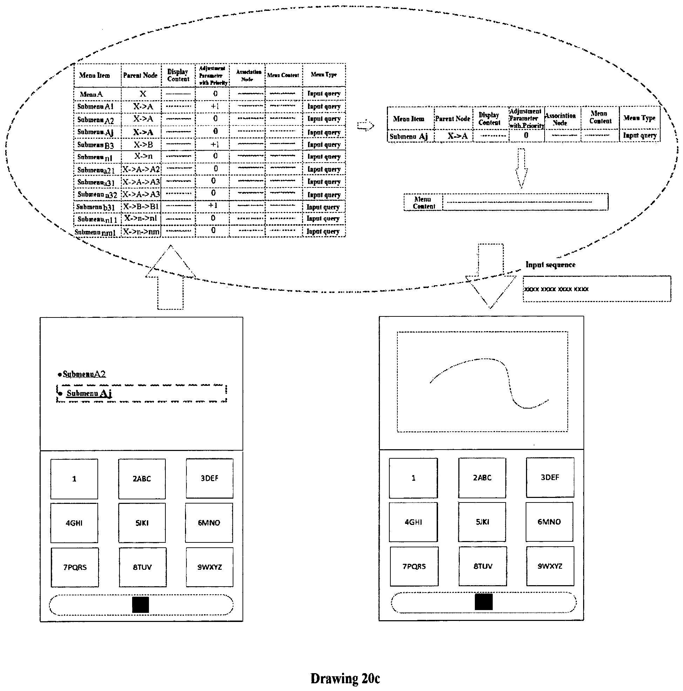

As shown in the figure 20a-20c, in one implementation method, when the user enters the input query menu 320, first, the input device 130 detects the input signal of the user, and then transmits the input signal to the processing device 110 which helps to form the input sequence according to the input signal. In addition, the processing device 110 obtains the menu of "input query" of the data field "menu type" and displays it according to the display level. Then, the processing device 110 further obtains the menu selected by the user in accordance with the detection results of the input device 130, extracts the "menu content" of the menu in this data field as well as performing the corresponding operation and getting the query results according to the input sequence input by the user.

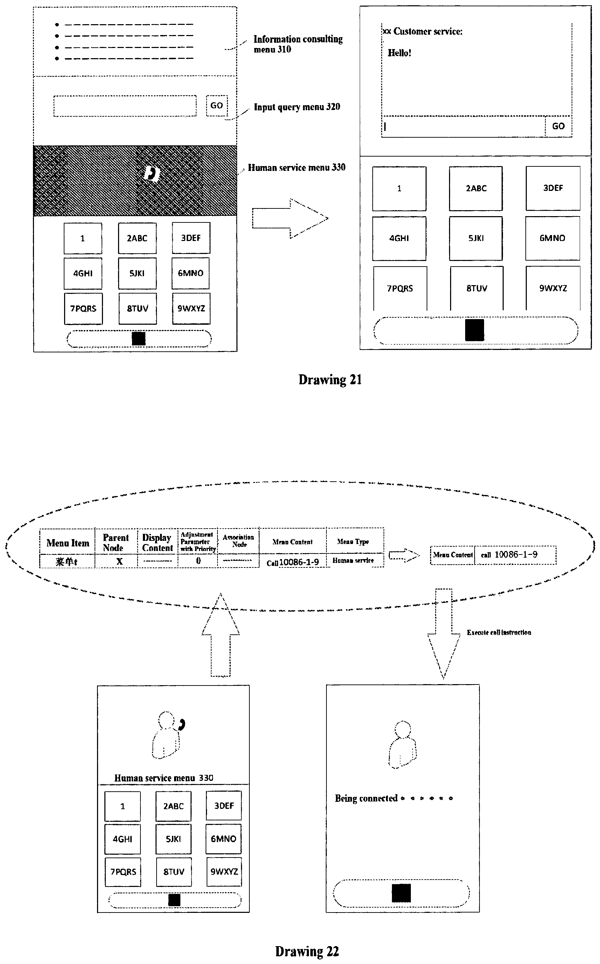

Wherein, the processing device 110 will jump directly to the platform menu of operator service as the operator service menu 330. In one implementation method, as shown in figure 21, for the business object objects providing artificial online services, the operator service menu 330 may include the platform menu that jumps directly to the online service platform. This platform menu might contain the website links to the online operator service interface; when the input device 130 detects the touch of the user on the operator service menu 330, then the processing device 110 obtains the content of the data field "menu content" for this menu and gains access to the corresponding website links which will be opened and the interface of online services will be displayed to the user. In another implementation method, for the business object objects who only provide the artificial voice services, as shown in figure 22, the operator service menu 330 can include the platform menu that may jump directly to the artificial voice services. For example, the data field "menu content" of this menu can be " dial 10086-1-9", that is, the preset number sequence included in the dial instructions. After the processing device 110 obtains the corresponding data field contents, it can activate the phone dialing program, extract the number sequence in the data field "menu content" and execute dial instructions, thereby directly connecting the user to the operator service. In some implementation cases, the data field "menu content" in this menu can also include the acquisition of instructions for the corresponding number sequence of the menu, wherein, the processing device 110 can have access to the corresponding node path according to the menu, i.e., the key sequence of all nodes in the access path from the root node to the menu node, and then obtain the corresponding sequence number according to the node path, such as the means of integrating the corresponding phone number of the business object object and the node path.

When the user selects the sub menu in a certain type of menu mentioned above through the input device 130, the processing device 110 detects the data field "link node" of this sub menu and the display levels corresponding to the link node so as to determine whether the sub menu points to other menus. When there are link nodes and the display levels is lower than that of the menu, that is to say, this menu has the next sub menu, then the processing device 110 obtains the next sub menu according to the link node of the menu. When there are link nodes and the display levels is higher than that of the menu, the processing device 110 jumps to the link node and displays the corresponding menu. When the link node does not exist, the processing device 110 extracts the data field "menu content" of this menu. When the data field "menu content" of this menu is a link, the link content is displayed to the user, such as the website link, image or text message. Further, in the process of jumping, the processing device 110 can further trigger the reminder mode, reminding the user in the form of multimedia.

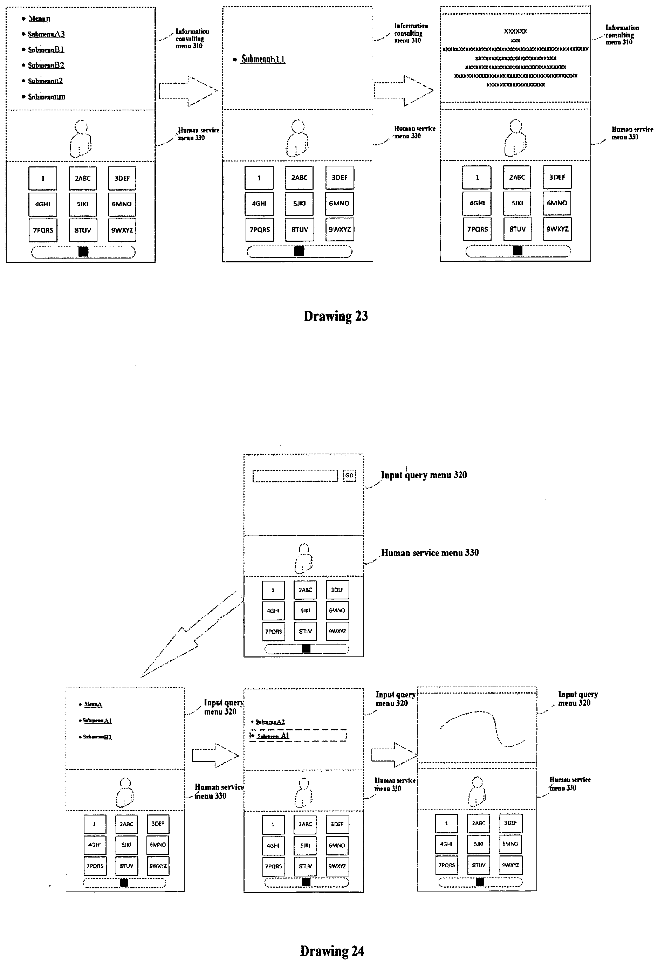

In some implementation methods, the described preset display mode further includes a preset time for display. For example, as shown in figure 23 and figure 24, when the information consulting menu 310 or the input query menu 320 has at least two levels of menu. For each level of the menu, always maintain the display of the operator service menu 330 so that the user can have direct access to operator service through the operator service menu 330 in any level of information consulting menu 310 or input query menu 320.

In another implementation method, the processing device 110 can also display the filtered platform menu to the user based on the corresponding position in the original voice menu according to the levels of voice menu and the settings of each level. For example, as shown in the figure 15a or 15b, the processing device 110 obtains the platform menus according to the voice menu of the targeted business object, and records the level and the voice content of each platform menu in the original voice menu. When starting the intelligent service interactive platform matching the targeted business object, the processing device 110 obtains the corresponding menu according to the user data, and display the platform menu to the user according to the corresponding display level.

In some implementation methods, the preset display mode also includes the display of platform menu according to the preset display level, wherein, the preset display level can be the original display level of this platform menu. For example, the platform menu is corresponding to the level in the voice menu, or the display level after updating the user data. At this time, the processing device 110 reads the data field "parent node" of this platform menu and the data field "priority adjustment parameters". When the data field "priority adjustment parameter" is zero, the display is performed according to the original display level. When the data field "priority adjustment parameter" is+1, then refer to the "parent node" of this menu and display it in advance for i levels; when data field "priority adjustment parameter" is -1, then refer to the "parent node" of this menu and delay in displaying it for i levels.

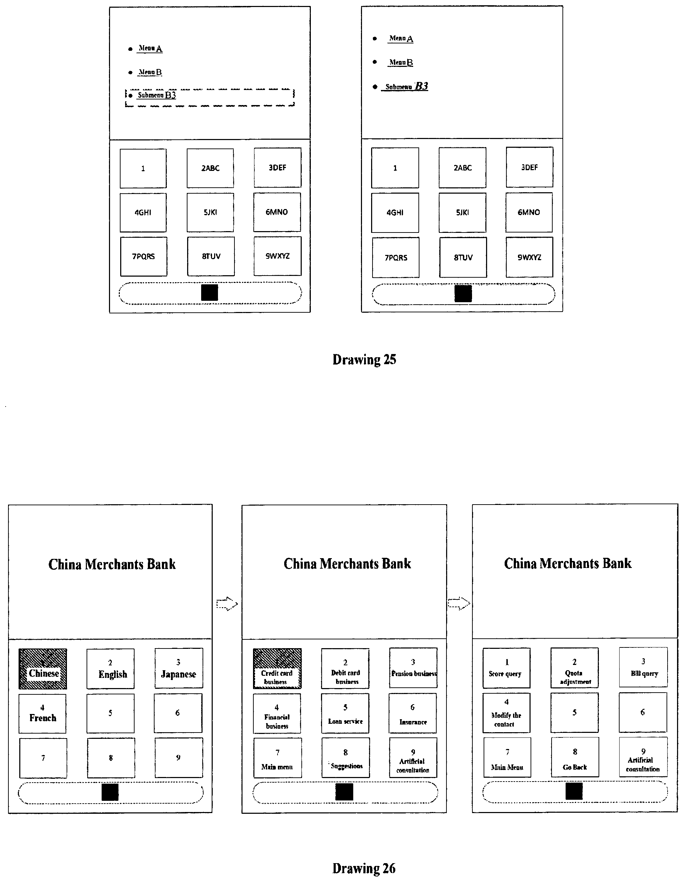

In some implementation methods, the preset display mode also includes the display of the specified platform menu in accordance with the preset display style. For example, as shown in figure 25, for the platform menu that requires "display priority" , the preset display mode includes making the platform menus into the default options in the menu group currently displayed, or displaying the icons or texts of the menu through adopting striking colors, fonts or font size.

In some implementation methods, the preset display mode also includes the display of the platform menu in the form of the preset layout. For example, as shown in the figure 26, the platform menus are respectively mapped to the dial keys of the dial keypad, so as not to change the main body of the original layout, improve the switching speed on the interface and avoid the discomfort brought to the user due to the frequent switching of interface caused by different displayed platform menus. In addition, the platform menus can be displayed on the screen interface in the form of a list or icons.

The input device 130 continues to detect the user's input on the interface 300 of intelligent service interactive platform or the next sub interface until the user finishes the services provided by the matching targeted business object and quit the interactive platform. For example, when the processing device 110 detects that the user clicks the exit button, or the user executes the exit gesture, or the input device 130 receives other input signals of exit from the user, or the non-operation time of the user exceeds the threshold value, then the processing device 110 executes the operation of exit from the intelligent service interactive platform .

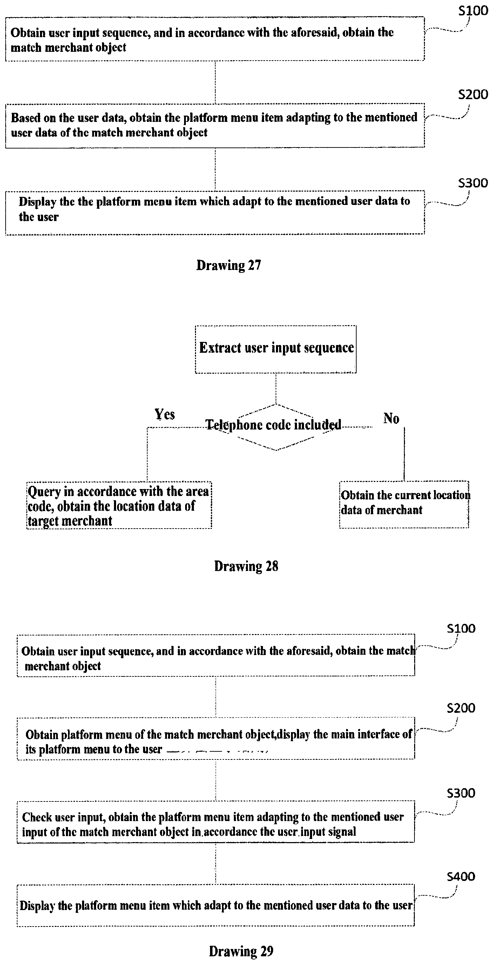

According to some aspects of this invention, one method for realizing the intelligent service interactive platform is further provided. As shown in the figure 27, one implementation method of realizing the intelligent service interactive platform can include: step S100: obtain the user's input sequence and the matching targeted business object according to the input sequence; step S200: obtain the platform menus corresponding to the user data according to the matching targeted business objects; step S300: display the platform menus of the corresponding user data to the user.

Particularly speaking, the step S100 may include the detection of the user's input signal and the acquisition of input sequence according to the input signal of the user. The input signal of the user can include the signals realized by means of voice, gesture, touching or pressing on the keys of the keyboard and identification of the specific figures through the input device 130 by the telephone user. Obtain the input sequence according to the input signal which will be processed by means of voice recognition, pattern recognition, dynamic recognition, 3D shape recognition, contact coordinate or pixel detection, etc.. After the input sequence is obtained, the targeted business objects will be further matched according to the input sequence. Specifically, the input sequence can be compared with the corresponding contents of the data field of the targeted business objects. For example, the input sequence is compared with the data fields like "name", "shortened form", "telephone number" and "Keywords" associated with the targeted business objects. Sort the targeted business objects according to the similarity degree or select the targeted business objects with maximal similarity as the matched ones.

The step S200 may include the acquisition of user data, which may include the location data, the interaction history between the user and the business object, the user's input history, the user's personal information and the user's current input information, etc.. Further, the user data may also be combined with the system parameters. For example, the user data may further include, but not limited to the current system language and the current system time, etc..

The location data can include the user's current location data or the current location data of the targeted business object the user is calling.

In some implementation methods, the processing device 110 can obtain GPS data through the html5 technology, such as the function of get Current Position ( ) that can helps to obtain the longitude and latitude of the user's location. In some implementation methods, the location data can also be the WIFI data. For example, for the Android devices, the processing device 110 can obtain the location positioned last time through the function of get Last Location (); or the processing device 110 can also get the corresponding mac address of WiFi through obtaining the hot name and signal strength of WiFi, thus obtaining the current location data of the user. In some implementation methods, for the terminal communication devices applicable to Android system, the processing device 110 can first obtain the mobile country code (MCC), mobile network code (MNC), location area code (LAC) and cell ID (CID) by the Telephony Manager and further obtain the current location data according to the API in Google or API in Baidu. In some implementation methods, the processing device 110 can analyze the XML that contains address information fed back by the user and gain access to the "nation, province (autonomous regions or municipalities directly under the central government), city (county), operators" in the json format, thus obtaining the current location data.

In some implementation methods, the acquisition of location data may include the analysis on the user's input sequences to obtain the location data. For example, the input sequence can help to obtain the telephone area code which will further help to obtain the corresponding menu. As is shown in the figure 28, the processing device 110 firstly extracts the user input sequence and detects whether there contains the telephone area code, such as the interception of the numbers at the beginning of preset digits of the input sequence; then, the processing device 110 makes judgment on the extracted numbers, such as searching the number of preset digits in the code-area look-up table. When the number does not exist, then the input sequence does contain the area code; when the input sequence contains the code, the processing device 110 will make query according to the code and obtain the corresponding names of administrative divisions. When the input sequence does not contain the code, the processing device 110 obtains the current user's location data.

The step S200 may also include the detection of whether to start the intelligent service interactive platform that matches the targeted business objects. In some implementation cases, the step S200 may include the acquisition of user data when detecting that the intelligent service interactive platform is activated. Many means can be adopted accordingly, such as the detection of whether there is touch, press or other starting methods on the preset platform start button, such as the detection of the existence of the preset voice or gesture instructions, or the setting of a predetermined time threshold value. Whether the intelligent service interactive platform is started can be judged through the detection of whether the time of waiting without further operation after the selection of the matching targeted business object exceeds the predetermined time threshold value.

The step S300 may further include the display of the platform menu to the user via the preset display mode, including the display of platform menu according to different display types, the preset display time, the preset display levels, the preset style or the preset layout.

As shown in figure 29, another implementation method of the intelligent service interactive platform includes: the step T100: obtain the user's input sequence and the matching targeted business object according to the described input sequence; step T200: obtain the platform menu of the matching targeted business object and display the main interface of the platform menu for the matching targeted business object to the user; step T300: detect the user input, and obtain the platform menus suitable for the user's input in the matching targeted business object according to the input signal and user data; step T400, further display the platform menus suitable for the user's input to the user.

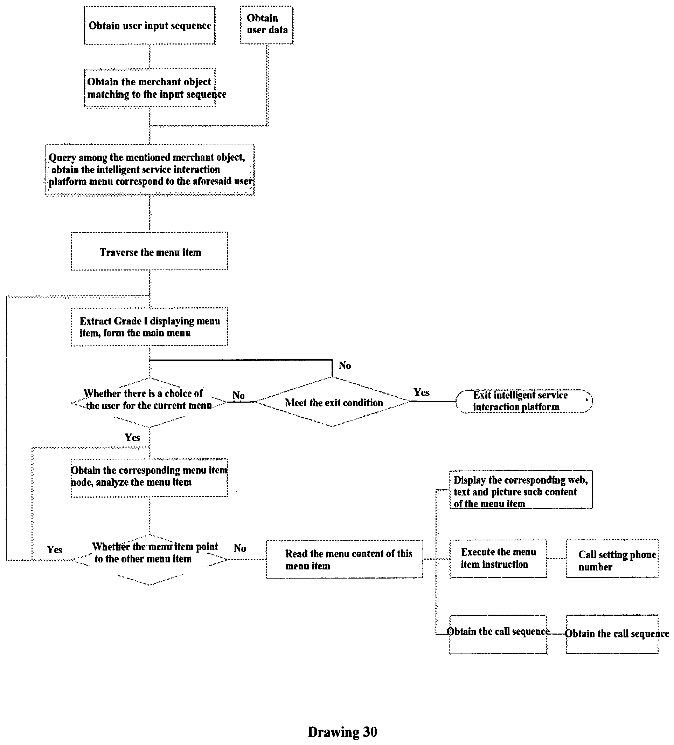

As shown in figure 30, according to some specific implementation cases in the realization method of the intelligent service interactive platform, when the user inputs through the input device 130, the input device 130 obtains and transmits the input signal to the processing device 110 which further obtains the user data via the input sequence obtained according to the input signal. Then, the processing device 110 makes queries in the storage device 120 and obtains the menus of the intelligent service interactive platform for the targeted business objects matching the input sequence and corresponding to the user data. First, make queries according to the input sequence and obtain the targeted business objects matched with the input sequence. Then, filter the menus of the intelligent service interactive platform of the targeted business object according to the user data and obtain the platform menus that contain user data or suitable to user data. Further, this can also include detecting whether the selected intelligent service interactive platform matching the targeted business object is started. When it is started, then obtain the user data.

The processing device 110 reads the platform menus matching the input sequence and corresponding to the user data in the storage device 120, or the processing device 110 locally downloads these platform menus from the storage device 120 via the communication port device and analyzes these platform menus. The processing device 110 traverses all platform menus, reads the display levels of these platform menus, and further extracts the platform menus displayed in the first level. The processing device 110 displays the platform menus on the main interface.

The input device 130 detects the presence of input in the current display interface of the user. When there exists no selection on the current menu by the user, then it can further determine whether the conditions for platform exit are met. For example, when the user clicks the exit button, or executes the exit gesture, or the input device 130 receives other input signals for exit from the user, or the non-operation time exceeds the threshold value, then the conditions for exit of intelligent service interactive platform are considered to be met, and the processing device 110 executes the exit operation. When there exists the choice of the current menu by the user, the input device 130 transmits the user's input signal to the processing device 110 which obtains the menu node selected by the user according to the input signal of the user and analyzes the menu.

The processing device 110's analysis on the menu selected by the user may further include determining whether there exists link node in the selected menu, or whether the menu points to other menus. When the menu has the next menu, the next menu will be obtained and displayed. When the menu points to its previous menu or main menu, the processing device 110 gets the menu it points to and jumps to its previous menu or main menu. When the menu has no link node or does not point to any other menus, the menu content of the menu is read and the corresponding operation is performed.

In some implementation methods, the menu content of the menu may contain data files used to represent the data content including the specified web pages, texts or images. In some implementation cases, the menu content of the menu may also contain instructions, such as the dial instruction or input instruction. When the menu content includes the dial instructions, the menu content may also include the preset number sequence so that the processing device 110 can obtain the number sequence and make the dialing when reading the dial instructions. In some implementation cases, the menu content of the menu may also contain instructions for obtaining the dial sequence and the dial instruction. The processing device 110 further reads the corresponding node path of the menu and obtains the key sequence for all node in the access path from the root node to the menu node. The processing device 110 obtains the dial sequence according to the key sequence. For example, the processing device 110 can regard the number sequence or the combination between the number corresponding to the targeted business object and the key sequence as the dial sequence, or search for the dial sequence corresponding to the number sequence by means of the look-up table. For instance, for China Mobile, the key sequence obtained is 3-1-1, then the corresponding dial sequence of the China Mobile obtained through the look-up table is 10086-3-1-1. After the corresponding dial sequence is obtained, the processing device 110 then executes the dial instructions to dial the dial sequence. In some implementation cases, the contents of the menu can also contain the input instructions that prompt the user to input. For example, it can display the input box to prompt the user to input in the input box, and it can also further obtain the user's input information according to the user's input signal detected by the input device 130. The processing device 110 executes the input instructions and operates on the obtained input information, such as storing the input information, like the interactive history, user account and input history, to the corresponding data field between the user and the targeted business object; further, the processing device 110 can also make queries according to the input information and return the query result which will be displayed to the user.

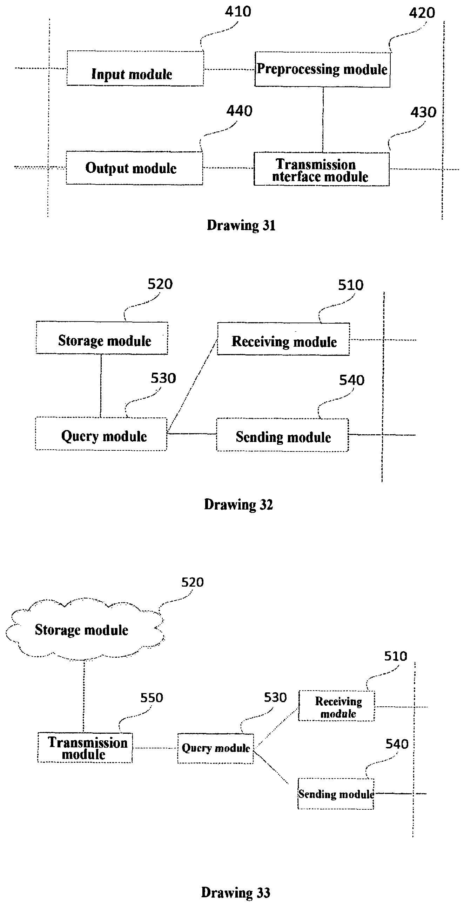

According to some aspects of the invention, the intelligent service interactive platform device is further provided. In one implementation method, as shown in the figure 31, the intelligent service interactive platform device 400 includes: input module 410 that is used to receive the user's input information matched with at least one targeted business object including the intelligent service interactive platform menu; pre-processing module 420 for access to user data; the transmission port module 430 for the transmission of user data obtained by pre-processing module 420 and the menus of the intelligent service interactive platform matched with the input information obtained by the input module 410 and the corresponding user data obtained by the pre-processing module 420; the output module 440 used to display the platform menus obtained from the transmission port module 430 to the user.

According to some aspects of the invention, the intelligent service interactive platform device is further provided. In one implementation method, as shown in the figure 32, the intelligent service interactive platform device 500 includes: the receiving module 510 used to receive the input information and user data; the storage module 520 used to store the targeted business objects and the contained intelligent service interactive platform menus, wherein the targeted business objects contain one or more data fields used to search for the targeted business object according to the input information and the intelligent service interactive platform menus contain one or more data fields that describe the features of menus; the query module 530 used to search in the intelligent service interactive platform menu in the storage module 520 and obtain the intelligent service interactive platform menu matched with the input information and corresponding to the user data according to the input information and user data; the sending module 540 used to send the intelligent service interactive platform menu obtained through the query module 530.

In particular, the storage module 520 can store the intelligent service interactive platform menu by virtue of the data structure of link objects. For example, according to the voice visualization results of each menu in the voice menu, each menu is regarded as a link object which contains one or more different data fields, such as "display text" , "menu content", "parent node" , "link node" "menu type" and "priority correction parameters". The link object groups formed by one or more menus constitute the intelligent service interactive platform menu.

In other implementation methods, the storage module 520 may also store the intelligent service interactive platform menu through the tree data structure. For example, each menu node in the tree data structure includes at least the data field "display content" and the data field "menu content". The former stores the icons and other data used to display the menu, and the latter stores the content description of the menu, which can be link, text, images, pointer or instructions.
According to the type of the data field "menu content" , the menu node in the tree data structure can include the indication node, and the data field "menu content" of this menu may contain pointers pointing to one or more preset nodes; for the content node, the data field "menu content" can contain data files or operation instruction.

In one implementation method, the storage module 520 can be at the same end as the receiving module 510, query module 530 and sending module 540. The query on the intelligent service interactive platform menu is completed through the local data exchange.

In another implementation method, the storage module 440 can be at different ends from the receiving module 510, query module 530 and sending module 540 to transmit data through the network. At this time, as shown in figure 33, the intelligent services interactive platform device 400 may further include: the transmission module 550 used to send the query request of the query module 530 to the storage module 440 whose query results will be returned to the query module 530. The query request includes at least the input information or user data, and the data field name of the targeted business objects or the intelligent service interactive platform menu.

Compared to the existing technology, this invention fully applies the user data in the process of matching the targeted business objects and / or filtering the platform menu, and / or displaying the obtained platform menu to the user, so as to provide users with platform menus more close to the actual needs in the construction of the intelligent service interactive platform between users and targeted business objects.

Only for the purposes of explanation, the components shown in the reference figures describe some of the aspects and implementation cases. However, the functions of the components can be overlapped and can be presented with fewer or more elements and components. In addition, all or part of the functions of the components can co-exist or be distributed among a number of geographically dispersed locations. Furthermore, the embodiments, features, aspects, and principles of the invention can be implemented in a variety of implementation cases, and are not limited to the environment. In addition, the sequence of the above events is illustrative and is not intended to limit. Therefore, other methods and steps can be adopted, and even if the above methods are adopted, the specific order of the event can be varied without deviating from the scope of the invention. Moreover, some steps may not be presented and additional steps can be achieved.

The implementation methods of the invention are often implemented on or inside the computer system structure which is well known in the field, and the functions can be realized by software or hardware. In software, a component can be a step, a program, or a part of it and performs a specific or related function. In hardware, a component is a functional hardware unit designed for use with other components. For example, a component can be implemented through using the discrete electronic components, or constitutes part of a whole circuit such as an application-specific integrated circuit (ASIC), and many other possibilities exist. The skilled personnel in the field can understand, and the invention can also be realized by the combination of hardware components and software components.

After taking into account the specifications and realizing the invention publicized here, the other implementation cases of the invention will be apparent to the technical staff in the field. The specifications and examples are only illustrative, and the actual scope and spirit of the invention are specified by the attached claims.

## Claims

1. An information interactive method, chartered in that, includes:
obtain an input sequence, and search for an associated business object according to said input sequence;
obtain a platform menu of said associated business object, according to a user data, wherein said platform menu is adapted to said user data;
display said platform menu adapted to the user data according to a designated display mode.

2. The method as claimed in claim 1, chartered in that, further includes: initiate an information interactive service of the associated business object.

3. The method as claimed in claim 2, chartered in that, further includes: said information interactive service is initiated when the following one or more operations is detected:
when there is a selection of an associated business object, initiate an information interactive service of the associated business object directly; or
when the waiting time period exceeds a predetermined time threshold, initiate an information interactive service of the associated business object; or
a preset voice order or a gesture order for initiating an information interactive service of the associated business object is detected; or
a press on the initiation button.

4. The method as claimed in any claim of the claims 1-3, chartered in that, further includes: displaying the corresponding platform menu in different types according to a type of user data type and an interactive form required by an information interactive platform, wherein each menu contains one or more at least one level of sub menu.

5. The method as claimed in any claim of the claims 1-4, chartered in that, further includes:
when a selection of an indication node menu is detected, obtain a designated node according to said indication node and jump to said designated node;
when a selection of a content node menu is detected, obtain the content of the node and get the data.

6. The method as claimed in any claim of the claims 1-4, chartered in that, further includes:
display said platform menu according to a preset display level;
change or mark the display level of the corresponding platform menu, to increase the display level of the platform menu need to "display in advance" or decrease the display level of the platform menu need to "display lag".

7. The method as claimed in claim 6, chartered in that, the display according to the preset display level further includes:
Obtain the display level of the platform menu and display according to the display level; or
Obtain the parent node and priority adjustment parameters of the platform menu, and display according to the indication level in the priority adjustment parameters of the parent node in advance or in delay; or
Obtain the selected menu according to the input signal, detect the existence of link nodes, obtain the display level of the link nodes and determine the level between the menu and the display level of the link node. When the display level of the link node is lower than the menu, the next sub menu is traversed and the next sub menu is formed; when the display level of the link node is higher than the menu, jump to the link node and display the corresponding menu; when there is no link node, extract the contents of the data field of the menu.

8. The method as claimed in any claim of claims 1-7, chartered in that, the display of the platform menus suitable for the user data through the preset display mode further includes: display the corresponding menu according to the preset display time.

9. The method as claimed in any claim of claims 1-8, chartered in that:
the display of the platform menus suitable for the user data through the preset display mode further includes: obtain the platform menu according to the voice menu matched with the targeted merchants, record the display level and voice content of each platform menu in the original voice menu and display accordingly.

10. The method as claimed in any claim of claims 2 and 9, chartered in that: the platform menus suitable for the user data in the targeted merchants according to the user data further include: obtain the node path according to the platform menus, obtain the dial sequence combined with the input sequence and make the dialing according to the dial sequence.

11. The method as claimed in any claim of claims 1-10, chartered in that:
the platform menus suitable for the user data in the targeted merchants according to the user data further include: obtain the current location data of the user or the targeted merchant, according to which the platform menu of the targeted merchant is filtered and the platform menus for the location data are obtained.

12. The method as claimed in claim 11, chartered in that: the filtering of the platform menus according to the current location data includes: select the platform menu with the location information closest to the current position data.

13. The method as claimed in any claim of claims 1-10, chartered in that:
the platform menus suitable for the user data in the targeted merchants according to the user data further include: the filtering of the platform menus on the matching targeted merchants based on the interactive history between the user and the targeted merchant.

14. The method as claimed in claim 13, chartered in that: obtain the interactive history of the account in the matching targeted merchants according to the user's account information.

15. The method as claimed in any claim of claims 1-10, chartered in that:
the platform menus suitable for the user data in the targeted merchants according to the user data further include: further complement the input information or input record according to the user's personal information, and filter the platform menu of the matching targeted merchants, wherein the input record includes the input content within the preset times, or repeat the input content in the previous time within the preset time.

16. The method as claimed in any claim of claims 1-10, chartered in that: the platform menus suitable for the user data in the targeted merchants according to the user data include:
Obtain the current voice of the system, or convert and display the platform menu in the form of the current voice of the system; or
Obtain the current time of the system, compare it with the time field of the platform menus provided by the matching targeted merchants, and get the platform menus that match the current time.

17. The method as claimed in any claim of claims 1-10, chartered in that: the platform menus suitable for the user data in the targeted merchants according to the user data include: obtain the feedback menus and the existing problems according to the feedback result of input, and make labeling or modification on feedback menus according to the problems.

18. The method as claimed in any claim of claims 1-10, chartered in that: the platform menus suitable for the user data in the targeted merchants according to the user data include: provide the open port of the platform menus for related merchants so that they can edit and operate on the platform menus.

19. The method as claimed in any claim of claims 1-10, chartered in that: update the platform menus on the targeted merchants according to the preset updating mode which includes instant updating or trigger updating.

20. The method as claimed in claim 8, chartered in that: the display of the corresponding platform menus in accordance with the preset timing includes the display of icon or text through adopting the eye-catching color, font or font size, or the preset layout form or the preset display order.

21. An information interactive system, chartered in that, includes:
The input device, suitable for detecting the user's input and obtaining the user's input information;
The storage device, suitable for storing the targeted merchants and the intelligent service interactive platform menu;
The processing device, suitable for receiving the input information from the input device, obtaining the input sequence and the user data according to the input information, obtaining the targeted merchants matched with the input sequence during the search in the storage device according to the input sequence and the user data and obtaining the platform menus corresponding to the user data from the matching targeted merchants;
the display device, suitable for displaying the platform menus obtained by the processing device through the preset display mode.

22. The system as claimed in claim 21, chartered in that: the described processing device further comprises the start of the intelligent service interactive platform service of the matching targeted merchant.

23. The system as claimed in claim 22, chartered in that: when the input device detects the presence of one or more of the following operations, the processing device starts the intelligent service interactive platform matched with the targeted merchants: when there is the selection of matched targeted merchants, directly start the intelligent service interactive platform matched with the targeted merchants, or when the waiting time exceeds the predetermined time threshold, start the intelligent service interactive platform service matched with the targeted merchants; when there is the existence of preset voice or gesture instructions, start the intelligent service interactive platform service matched with the targeted merchants; when there exists the operation of the platform start keys.

24. The system as claimed in any claim of claims 21-23, chartered in that: the display device further comprises: display the corresponding platform menu in different display types according to the type and interactive form of user data required by the platform menu, wherein each type of menu contains one or more at least one level of the next sub menu.

25. The system as claimed in any claim of claims 21-24, chartered in that includes:
When the input device detects the selection of the menu of the indication node type, the processing device obtains the preset node according to the indication node, and performs the operation of jumping to the preset node;
When the input device detects the presence of the selection of the menu of the content node type, the processing device reads the contents of the menu, and obtains the data file.

26. The system as claimed in any claim of claims 21-24, chartered in that further includes:
Display the platform menu according to the preset display level;
Alter or mark the display level corresponding to the platform menu so as to improve the display level of the platform menu which needs the "display priority", or reduce the display level of the menu which needs the "display lag".

27. The system as claimed in claim 26, chartered in that further includes:
The processing device obtains the display level of the platform menu, and the display device displays the platform menu according to the display level after the treatment of the processing device; or
The processing device obtains the parent node and priority adjustment parameters of the platform menu, and pushes forward or delays the indication level of the priority adjustment parameters in accordance with the parent node. The display device displays the platform menus according to the display level after the treatment of the processing device; or
The processing device obtains the selected menu according to the input signal, detects the existence of link nodes, obtains the display level of the link nodes and determines the level between the menu and the display level of the link node. When the display level of the link node is lower than the menu, the next sub menu is traversed, the next sub menu is formed, and the next sub menu is displayed; when the display level of the link node is higher than the menu, the processing device jumps to the link node and displays the corresponding menu; when there is no link node, the processing device extracts the contents of the data field of the menu which will be displayed by the processing device.

28. The system as claimed in any claim of claims 21-27, chartered in that further includes: display the corresponding platform menu according to the pre-set display timing.

29. The system as claimed in any claim of claims 21-28, chartered in that further includes: obtain the platform menu according to the voice menu of the matching targeted merchants, record the display level and voice content of each platform menu in the original voice menu, and display the platform menus through the display device according to their display level and content in the original voice menu.

30. The system as claimed in any claim of claims 22 and 29, chartered in that further includes: obtain the node path according to the platform menus, obtain the dial sequence combined with the input sequence and make the dialing according to the dial sequence.

31. The system as claimed in any claim of claims 21-30, chartered in that further includes: obtain the current location data of the user or the targeted merchant, according to which the platform menu of the targeted merchant is filtered and the platform menus for the location data are obtained.

32. The system as claimed in claim 31, chartered in that: the filtering of the platform menus according to the current location data includes: select the platform menu with the location information closest to the current position data .

33. The system as claimed in any claim of claims 21-30, chartered in that further includes: the filtering of the platform menus on the matching targeted merchants based on the interactive history between the user and the targeted merchant.

34. The system as claimed in claim 33, chartered in that further includes: obtain the interactive history of the account in the matching targeted merchants according to the user's account information.

35. The system as claimed in any claim of claims 21-30, chartered in that further includes: further complement the input information or input record according to the user's personal information, and filter the platform menu of the matching targeted merchants, wherein the input record includes the input content within the preset times, or repeat the input content in the previous time within the preset time.

36. The system as claimed in any claim of claims 21-30, chartered in that further includes: obtain the current voice of the system, or convert and display the platform menu in the form of the current voice of the system; or obtain the current time of the system, compare it with the time field of the platform menus provided by the matching targeted merchants, and get the platform menus that match the current time.

37. The system as claimed in any claim of claims 21-30, chartered in that further includes: obtain the feedback menus and the existing problems according to the feedback result of input, and make labeling or modification on feedback menus according to the problems.

38. The system as claimed in any claim of claims 21-30, chartered in that further includes: provide the open port of the platform menus for related merchants so that they can edit and operate on the platform menus.

39. The system as claimed in any claim of claims 21-30, chartered in that further includes: update the platform menus on the targeted merchants according to the preset updating mode which includes instant updating or trigger updating.

40. The system as claimed in claim 28, chartered in that: the display of the corresponding platform menus in accordance with the preset timing includes the display of icon or text through adopting the eye-catching color, font or font size, or the preset layout form or the preset display order.

41. An information interactive platform, chartered in that:
a input device, suitable for receiving the user's input information matched with at least one targeted merchant which includes the intelligent service interactive platform menu;
a pre-processing module, for access to user data;
a transmission port module, for the transmission of user data obtained by pre-processing module and the menus of the intelligent service interactive platform matched with the input information obtained by the input module and the corresponding user data obtained by the pre-processing module;
an output module, used to display the platform menus obtained from the transmission port module to the user.

42. An information interactive platform, chartered in that:
a receiving module, used for receiving input information and user data;
a storage module, used for storing the targeted merchants and the contained intelligent service interactive platform menu, wherein the targeted merchants contain one or more data fields used to search for the targeted merchants according to the input information and the intelligent service interactive platform menu contains one or more data fields describing the features of menus;
a query module, used to search in the intelligent service interactive platform menu in the storage module and obtain the intelligent service interactive platform menu matched with the input information and corresponding to the user data according to the input information and user data;
a sending module, used to send the intelligent service interactive platform menu obtained through the query module.
